# EUROPÄISCHE PATENTSCHRIFT

(11) **EP 4 428 821 B1**
(45) Veröffentlichungstag und Bekanntmachung des Hinweises auf die Patenterteilung: **20.08.2025**
(21) Anmeldenummer: 24157920.0
(22) Anmeldetag: 15.02.2024
(51) Int. Cl.: G06T 7/579

(54) **SLAM-VERFAHREN**
SLAM METHOD
PROCÉDÉ DE SLAM

(30) Priorität: 07.03.2023 DE 102023105585
(43) Veröffentlichungstag der Anmeldung: 11.09.2024
(73) Patentinhaber: dSPACE GmbH, 33102 Paderborn (DE)
(72) Erfinder: Biester, Tobias, 76133 Karlsuhe (DE); Neubert, Boris, 76316 Malsch (DE); Röthlingshöfer, Veith, 6020 Innsbruck (AT)

(56) Entgegenhaltungen:
- US-A1- 2021 380 125
- BEHLEY JENS ET AL: "Efficient Surfel-Based SLAM using 3D Laser Range Data in Urban Environments", ROBOTICS: SCIENCE AND SYSTEMS XIV, 26 June 2018 (2018-06-26), pages 1 - 10, XP055812701, ISBN: 978-0-9923747-4-7, DOI: 10.15607/RSS.2018.XIV.016
- SHAN TIXIAO ET AL: "LIO-SAM: Tightly-coupled Lidar Inertial Odometry via Smoothing and Mapping", 24 October 2020 (2020-10-24), pages 5135 - 5142, XP093189804, Retrieved from the Internet <URL:http://ras.papercept.net/images/temp/IROS/files/0063.pdf> DOI: 10.1109/IROS45743.2020.9341176
- DELLAERT FRANK: "Factor Graphs: Exploiting Structure in Robotics", 12 January 2021 (2021-01-12), pages 141 - 166, XP093189770, Retrieved from the Internet <URL:https://www.annualreviews.org/docserver/fulltext/control/4/1/annurev-control-061520-010504.pdf?expires=1721909148&id=id&accname=guest&checksum=973E103E048B33BBA7E7A8DF45DE6690> DOI: 10.1146/annurev-control-061520-

## Beschreibung

Die Erfindung betrifft ein computerimplementiertes Verfahren zum Bestimmen einer Ego-Pose eines mobilen Systems und Erstellen einer auf 3D-Ellipsoiden basierende Surfel-Karte einer Umgebung.

Zudem betrifft die Erfindung eine Vorrichtung zur Datenverarbeitung umfassend Mittel zur Ausführung des obigen Verfahrens.

Weiterhin betrifft die Erfindung ein Computerprogrammprodukt, umfassend Befehle, die bei der Ausführung des Programms durch einen Computer diesen veranlassen, das obige Verfahren auszuführen.

Ferner betrifft die Erfindung einen computerlesbaren Datenträger, auf dem das obige Computerprogrammprodukt gespeichert ist.

Unter SLAM (englisch *Simultaneous Localization and Mapping*; deutsch Simultane Positionsbestimmung und Kartierung) wird die algorithmische Problemstellung verstanden, durch Auswerten von Sensordaten eines Umfeldsensors eines mobilen Systems, wie beispielsweise eines Fahrzeuges, eine Karte der Umgebung zu erstellen und zugleich die räumliche Lage des mobilen Systems - auch als Ego-Pose bezeichnet - innerhalb dieser Karte zu schätzen.

Eine Herausforderung bei computerunterstützen Verfahren, um SLAM-Probleme zu lösen, ist, dass für eine genaue Posen-Bestimmung eine entsprechend detaillierte Karte benötigt wird und für die Generierung einer detaillierten Karte die genaue Pose des mobilen Systems bekannt sein muss. Daraus wird deutlich, dass diese zwei Anforderungen, Kartenerstellung und Selbstlokalisierung, nicht unabhängig voneinander gelöst werden können. Ein SLAM-Problem ist somit ein Henne-Ei-Problem, da weder die Karte noch die Pose bekannt ist, sondern diese gleichzeitig geschätzt werden. Mathematisch formuliert stellt ein SLAM-Problem somit ein numerisches Optimierungsproblem dar.

Im Stand der Technik sind einige Algorithmen bekannt, die eine Lösung für das SLAM-Problem bieten. Diese SLAM-Algorithmen sind in der Regel auf die verfügbaren Ressourcen, wie die Art der vorhandene Sensordaten des mobilen Systems beispielsweise LiDAR Daten, Trägheitssensordaten, GPS-Daten und/oder Daten des Vortriebsystems zugeschnitten. SLAM-Algorithmen werden unter anderem in mobilen Systemen wie autonomen Robotersystemen, selbstfahrenden Fahrzeugen, und/oder unbemannten Luftfahrzeugen zur Navigationsunterstützung eingesetzt.

Eine weitere Anwendung von SLAM-Algorithmen findet sich bei der Erstellung von annotierten Datensätzen. Dabei werden SLAM-Algorithmen als vorbereitender Schritt bei Annotationsprojekten eingesetzt, um sowohl manuell als auch automatisch erstellte Annotationsergebnisse zu verbessern. Annotierte Datensätze sind beispielsweise eine Grundvoraussetzung zum Trainieren von einigen auf maschinellem Lernen basierenden Algorithmen. Im Gegensatz zu SLAM-Algorithmen, die direkt in mobilen Systemen zur Navigationsunterstützung eingesetzt werden und in der Regel auch auf Rechengeschwindigkeit optimiert sind, ist die Rechengeschwindigkeit für SLAM-Algorithmen, die beim Annotieren von Datensätzen Verwendung finden oftmals zweitrangig. Zudem sind SLAM-Algorithmen, die direkt in mobilen Systemen zur Navigationsunterstützung eingesetzt werden, auf die vom mobilen System zur Verfügung gestellten Ressourcen optimiert. Da beim Annotieren von Datensätzen hingegen nicht ausschließlich Daten von einem bestimmten mobilen System mit einer bestimmten vordefinierten Sensorkonfiguration verarbeitet werden, ist es für SLAM-Algorithmen in solchen Fällen vorteilhaft, wenn der SLAM-Algorithmus flexibel mit unterschiedlichen Ressourcen umgehen kann.

Im Stand der Technik vorhandene SLAM-Algorithmen sind in der Regel in der Lage sehr gute Ergebnisse mit Datensätzen zu erzeugen, die eine relativ große Anzahl leicht unterscheidbarer Merkmale aufweisen. Solche Datensätze werden normalerweise in städtischen Umgebungen und beim Fahren mit geringer Geschwindigkeit aufgenommen, wobei die geringe Geschwindigkeit den Vorteil hat, dass das mobile System - meist ein Fahrzeug - zwischen aufeinanderfolgenden Einzelbildern des Umfeldsensors sich lediglich örtlich wenig fortbewegt hat. Die Ergebnisse solcher SLAM-Algorithmen sind aber weit weniger verlässlich bei anspruchsvolleren Datensätzen, die unter anderen Bedingungen aufgezeichnet wurden, wie beispielsweise Autobahnfahrten. Aufgrund der Ähnlichkeit der Sensordaten zwischen den aufeinanderfolgenden Einzelbildern, die oftmals von der seitlich von Autobahnen vorhandener monotoner Vegetation oder von der Leitplanke herrühren, ist es schwierig, Merkmale aufgrund ihrer Ähnlichkeit aufeinander abzubilden. Zudem stellen die höhere Geschwindigkeit des Fahrzeuges sowie das Vorhandensein dynamischer Objekte - wie andere Verkehrsteilnehmer - weitere Herausforderungen dar.

In anderen Worten zeigen also im Stand der Technik vorhandene SLAM-Algorithmen Schwächen bei anspruchsvollen Datensätzen, wie bei Datensätzen mit einer begrenzten Anzahl identifizierbarer und abgleichbarer Merkmale zwischen den Einzelbildnern, bei mit hoher Geschwindigkeit des mobilen Systems aufgezeichneten Datensätzen und/oder bei Datensätzen mit dynamischen Objekten.

Davon ausgehend ist es die Aufgabe der Erfindung, einen SLAM-Algorithmus bereitzustellen, der flexibel mit unterschiedlichen zur Verfügung gestellten Ressourcen umgehen kann und/oder auch bei anspruchsvollen Datensätzen verlässliche Ergebnisse liefert.

Diese Aufgabe wird durch den Gegenstand der Hauptansprüche gelöst. Bevorzugte Weiterbildungen finden sich in den Unteransprüchen.

Erfindungsgemäß wird also ein computerimplementiertes Verfahren zum Bestimmen einer Ego-Pose eines mobilen Systems und Erstellen einer auf 3D-Ellipsoiden basierende Surfel-Karte einer Umgebung mittels eines durch einen Faktor-Graphen repräsentierten Optimierungsproblems bereitgestellt, umfassend die Schritte
- Empfangen von Umfeldsensordaten, wobei die Umfeldsensordaten durch wenigstens einen am mobilen System angebrachten Umfeldsensor, der die Umgebung des mobilen Systems vermisst, generiert wurden und wobei die Umfeldsensordaten die Umgebung des mobilen Systems als Punktwolke in jeweils einem spezifischen Zeitraum repräsentieren,
- Erzeugen von Surfeln durch Konvertieren der Punktwolke der empfangenen Umfeldsensordaten in Surfeldaten,
- Identifizieren von neuen Surfeln und von vorbekannten Surfeln in den erzeugten Surfeln durch Vergleichen der Surfeldaten mit der Surfel-Karte, und
- Hinzufügen eines Surfel-Faktors zu dem Faktor-Graphen für die als vorbekannt identifizierten Surfel und/oder Hinzufügen eines Surfel-Knotens und eines Surfel-Faktors zu dem Faktor-Graphen für als neu identifizierte Surfel,
wobei ein Knoten des Faktor-Graphens eine spezifische Ego-Pose des mobilen Systems oder als Surfel-Knoten ein spezifisches Surfel in Kartenkoordinaten repräsentiert,
wobei eine Kante zwischen einem Knoten, der eine Ego-Pose repräsentiert und einem Knoten der ein Surfel repräsentiert, als Surfel-Faktor eine räumliche Restriktion zwischen der von dem Knoten repräsentierten Ego-Pose und der aus dieser spezifischen Ego-Pose für den Umfeldsensor erkennbares Surfel repräsentiert und eine Wahrscheinlichkeitsverteilung über eine Darstellbarkeit dieses Surfels für den Umfeldsensor aus dieser spezifischen Ego-Pose heraus umfasst, und
wobei der das Optimierungsproblem repräsentierende Faktor-Graph inkrementell nach Empfangen der Umfeldsensordaten eines ersten spezifischen Zeitraumes erstellt und das Optimierungsproblem inkrementell gelöst wird, bevor die Surfel-Faktoren der als vorbekannt identifizierten Surfel und/oder bevor die Surfel-Knoten und Surfel-Faktoren der neuen Surfel zu dem Faktor-Graphen hinzugefügt werden und die Schritte für Umfeldsensordaten eines späteren spezifischen Zeitraums als des ersten spezifischen Zeitraumes wiederholt werden.

Das erfindungsgemäße Verfahren ist in anderen Worten ein SLAM-Algorithmus, der das Optimierungsproblem als Faktor-Graphen modelliert. Faktor-Graphen sind eine Form probabilistischer grafischer Modelle. Sie ermöglichen eine Art der Abstraktion des Problems, die es einfacher macht, computerimplementierte Lösungsverfahren für das Optimierungsproblem zu finden. Die Knoten im Faktor-Graphen repräsentieren die unbekannten Variablen des Optimierungsproblems - sprich vorliegend die Ego-Pose des mobilen Systems in einem spezifischen Zeitraum und die Pose der Surfel in Kartenkoordinaten - wobei die Faktoren des Faktor-Graphen probabilistische Restriktionen auf diese Variablen darstellen, die auf Messergebnissen und/oder Vorwissen beruhen. Beim Lösen eines durch einen solchen Faktor-Graphen repräsentierten Optimierungsproblems wird zunächst ein spezifisches Set an Werten für die unbekannten Variablen als Anfangswerte verwendet und ermittelt, wie gut diese Werte das Optimierungsproblem lösen. Durch Verändern der Werte, werden diejenigen Werte für die Variablen gefunden, die das durch den Faktor-Graphen repräsentierte Problem am besten lösen.

Unter einem mobilen System wird vorliegend jedes System verstanden, das sich in einer Umgebung - beispielsweise Luft, Wasser oder Land - fortbewegen kann. Das mobile System kann beispielsweise als Fahrzeug, Flugzeug, Roboter, Schienenfahrzeug oder Schiff ausgestaltet sein. Bevorzug handelt es sich beim mobilen System um ein Fahrzeug, also um ein sich an Land fortbewegendes mobiles System. Weiter bevorzugt handelt es sich beim mobilen System um ein nicht an Schienen gebundenes Fahrzeug, und besonders bevorzugt um ein Kraftfahrzeug.

Unter Pose wird vorliegend die Position und Orientierung (sprich Ausrichtung) eines Objektes verstanden. Bei der Ego-Pose handelt es sich somit um die Position und Orientierung des mobilen Systems. Unter Pose des Surfels in der Surfel-Karte wird entsprechend die Position und Orientierung eines Surfels in Kartenkoordinaten verstanden.

Bevorzugt handelt es sich bei den Umfeldsensordaten um LiDAR-Daten und bei dem Umfeldsensor um einen LiDAR-Sensor. LiDAR ist eine Form des dreidimensionalen Laserscanning, bei dem Laserstrahlen zum Ermitteln des Abstandes eingesetzt werden.

Beim spezifischen Zeitraum des Verfahrens handelt es sich um einen Zeitraum, innerhalb dessen der Umfeldsensor die Punktwolke generiert hat. Der spezifische Zeitraum wird auch als *frame* bezeichnet. In Bezug zum LiDAR-Sensor als Umfeldsensor hängt die Länge des Zeitraumes damit zusammen, wie schnell der LiDAR-Sensor für eine Umdrehung braucht. Bei 600 Umdrehungen pro Minute ist der Zeitraum beispielsweise 0,1 Sekunden lang. In diesem Zeitraum wird eine Punktwolke mit Punkten von der Umgebung generiert. Beispielsweise kann ein LiDAR-Sensor mit 64 Scankanälen 1,33 Millionen Punkte pro Sekunde ausgeben. Durch Rotation mit 600 Umdrehungen pro Minute aktualisiert der LiDAR-Sensor in diesem Beispiel also 10 *frames* pro Sekunde mit 0,133 Millionen Messpunkten pro *frame.*

Ein Aspekt der Erfindung ist, dass die Karte auf 3D-Ellipsoiden basiert. Da 3D-Ellipsoide auch als ellipsoide Surfel (Abkürzung des englischen Begriffs *surface element* für Oberflächenelement) bezeichnet werden, handelt es sich somit um eine Surfel-Karte. Bei der Surfel-Karte wird ein Objekt also durch ein oder mehrere 3D-Ellipsoide repräsentiert.

Bevorzugt ist ein Surfel jeweils eine Approximation einer Gruppe von Punkten. Weiter bevorzugt umfasst ein Surfel eine oder mehr Informationen betreffend ein Zentrum des Surfels, eine Rotation des Surfels - insbesondere Informationen betreffend die Ausrichtung zweier lokaler Hauptachsen des Surfels - eine Ausdehnung des Surfels entlang seiner drei Hauptachsen, eine Verteilung von Messzeitpunkten der Punkte entlang der drei Hauptachsen und/oder eine Approximation der Verteilung von Messzeitpunkten, und einen Wert für eine Stangenartigkeit des Surfels und/oder einen Wert für eine Scheibenartigkeit des Surfels.

Weiter bevorzugt umfasst die Approximation der Verteilung von Messzeitpunkten mindestens vier bevorzugt sechs Messzeitpunkte, die aus den Messzeitpunkten der Punkte der Punktwolke hervorgegangen sind. Besonders bevorzugt handelt es sich um Messzeitpunkte jener vier Punkte, die die maximale Ausdehnung des Surfels entlang der zwei längsten Hauptachsen definieren, und weiter bevorzugt um Messzeitpunkte jener sechs Punkte, die die maximale Ausdehnung des Surfels entlang der drei Hauptachsen definieren.

Bevorzug ist ein stangenartiges Surfel ein Surfel, das eine große Ausdehnung entlang genau einer Hauptachse und eine geringe Ausdehnung entlang der zwei anderen Hauptachsen aufweist. Ein scheibenartiges Surfel ist bevorzugt ein Surfel, das eine geringe Ausdehnung entlang genau einer Hauptachse und eine große Ausdehnung entlang der zwei anderen Hauptachsen aufweist. Der Wert für die Stangenartigkeit und/oder Scheibenartigkeit wird also bevorzugt aus den Ausdehnungen des Surfels entlang seiner drei Hauptachsen gebildet.

Ein weiterer Aspekt der Erfindung ist die inkrementelle Erstellung des Faktor-Graphen und das inkrementelle Lösen des durch diesen Faktor-Graphen repräsentierten Optimierungsproblems. In anderen Worten wird derart die Lösungsfindung der Ego-Pose des mobilen Systems in Kartenkoordinaten nicht für jeden einzelnen spezifischen Zeitraum für sich allein durchgeführt, sondern die Surfel in Kartenkoordinaten werden inkrementell als optimierbare Variablen in den Faktor-Graphen integriert. Insbesondere wird das Optimierungsproblem inkrementell gelöst, bevor die Surfel-Faktoren der als vorbekannt identifizierten Surfel und/oder die Surfel-Knoten und Surfel-Faktoren der als neu identifizierte Surfel zu dem Faktor-Graphen hinzugefügt werden und die Schritte mit Umfeldsensordaten eines späteren Zeitraumes wiederholt werden. Weiter bevorzugt wird das Optimierungsproblem inkrementell gelöst, bevor die Surfeldaten mit der Surfel-Karte verglichen werden. Dies ermöglicht einerseits mit den intrinsischen durch Messungenauigkeiten hervorgerufenen Unbestimmtheiten der Surfel-Karte und anderseits mit einer Verzerrung der Punktwolke der Umfeldsensordaten aufgrund der Eigenbewegung des mobilen Systems bei der Aufnahme der Umfeldsensordaten umzugehen. Eine hohe Geschwindigkeit des mobilen Systems, wie sie beispielsweise bei Autobahnfahrten vorkommt, führen dazu, dass die Punkte der Punktwolke in einem spezifischen Zeitraum keine akkurate Repräsentation der Umgebung des mobilen Systems bilden, da sie durch die Eigenbewegung des mobilen Systems verzerrt sind. Durch das Hinzufügen des Surfel-Faktors für ein schon einmal gesehenes Surfel zum Faktor-Graphen wird die Pose dieses Surfels, also die Position sowie auch die Ausrichtung des Surfels optimiert. In anderen Worten wird also die Repräsentation der Umgebung während des Verfahrens mit optimiert, so dass die Nachteile, die durch die sensorseitig hervorgerufene wenig akkurate Repräsentation der Umgebung hervorgerufen werden, kompensiert werden.

Das erfindungsgemäße Verfahren eignet sich besonders, um anspruchsvolle Datensätze, die beispielsweise bei hoher Geschwindigkeit aufgezeichnet wurden, dynamische Objekte beinhalten und/oder die wenige identifizierbare und abgleichbarer Merkmale aufweisen, auszuwerten. Zudem eignet sich das erfindungsgemäße Verfahren besonders, um in Annotationsprojekten eingesetzt zu werden, da das Verfahren auch Ergebnisse liefert, wenn lediglich die empfangenen Umfeldsensordaten als Ressource zur Verfügung stehen und nicht auf weitere Ressourcen wie Trägheitssensordaten, GPS-Daten und/oder Daten des Vortriebsystems wie Raddrehzahlsensordaten des mobilen Systems zurückgegriffen werden kann. Der Aufbau des Verfahrens erlaubt eine flexible Integration weiterer Ressourcen und ist somit flexibel erweiterbar, was besonders für Annotationsprojekte von großem Vorteil ist.

In Zusammenhang mit der hohen Flexibilität des Verfahrens ist gemäß einer bevorzugten Weiterbildung der Erfindung vorgesehen, dass eine Kante zwischen zwei Knoten, die Ego-Posen repräsentieren, einen Eigenbewegungs-Faktor umfasst, der eine räumliche Restriktion zwischen den von den jeweiligen Knoten repräsentierten Ego-Posen repräsentiert und eine Wahrscheinlichkeitsverteilung über eine Transformation zwischen den zwei Ego-Posen umfasst.

Insbesondere, wenn keine weiteren Ressourcen vorhanden sind, ist bevorzugt vorgesehen, dass der Eigenbewegungs-Faktor auf Basis von Modellannahmen eines Eigenbewegungsmodelles beruht. Das Eigenbewegungsmodell berechnet bevorzugt einen Posen-Fehler des mobilen Systems als Differenz zwischen der aktuellen Pose und der letzten mit der Geschwindigkeit propagierten Pose. Bevorzugt wird ein Geschwindigkeitsfehler als einfache Differenz zwischen zwei aufeinanderfolgenden Geschwindigkeiten berechnet. Das Verfahren beruht also bevorzugt auf der Grundannahme, dass die Geschwindigkeitsdifferenz des mobilen Systems in zwei direkt aufeinanderfolgenden Zeiträumen gering ist.

Wenn hingegen weitere Ressourcen vorhanden sind, ist bevorzugt vorgesehen, dass das Verfahren den Schritt Empfangen von Eigenbewegungssensordaten, beispielsweise Trägheitssensordaten, GPS-Daten und/oder Daten des Vortriebsystems wie Raddrehzahlsensordaten des mobilen Systems umfasst und der Eigenbewegungs-Faktor auf Basis von Modellannahmen des Eigenbewegungsmodelles und auf den Eigenbewegungssensordaten beruht.

Bei GPS-Daten als Ressourcen ist bevorzugt vorgesehen, dass der Eigenbewegungs-Faktor zumindest anteilig auf einer Differenz zwischen der geschätzten Ego-Pose des mobilen Systems und der aus den GPS-Daten ermittelten Ego-Pose des mobilen Systems beruht. Bei Trägheitssensordaten und/oder Daten des Vortriebsystems wie Raddrehzahlsensordaten ist bevorzugt vorgesehen, dass der Eigenbewegungs-Faktor zumindest anteilig auf einer Differenz zwischen den Trägheitssensordaten und/oder Daten des Vortriebsystems, die in zwei direkt aufeinanderfolgenden Zeiträumen aufgezeichnet wurden, beruht.

Da bevorzugt die Surfeldaten ausgehend von den Umfeldsensordaten zunächst in lokalen Koordinaten des mobilen Systems erzeugt werden, hingegen die Surfel-Karte nicht in diesen lokalen Koordinaten vorliegt, umfasst das Verfahren bevorzugt den Schritt Transformieren der Surfeldaten von lokalen Koordinaten des mobilen Systems in Kartenkoordinaten der Surfel-Karte. Weiterhin ist gemäß einer bevorzugten Weiterbildung der Erfindung ist vorgesehen, dass der Schritt des Erzeugens von Surfeln durch Konvertieren der Punktwolke der empfangenen Umfeldsensordaten in Surfeldaten ein Erzeugen von Surfeln in lokalen Koordinaten des mobilen Systems und der Schritt des Identifizierens von neuen Surfeln und von vorbekannten Surfeln in den erzeugten Surfeln durch Vergleichen der Surfeldaten mit der Surfel-Karte, ein Transformieren der in lokalen Koordinaten des mobilen Systems erzeugten Surfel in Surfel in Kartenkoordinaten umfasst.

In anderen Worten wird in einer Alternative also bevorzugt zunächst ausgehend von der Punktwolke der empfangenen Umfeldsensordaten Surfeldaten erzeugt, indem Surfel in lokalen Koordinaten des mobilen Systems erzeugt werden. Bevorzugt werden diese Surfeldaten anschließend in die Kartenkoordinaten transformiert. Bevorzugt wird bei der Transformation die geschätzte Ego-Pose des mobilen Systems zu dem spezifischen Zeitraum der Vermessung der Umfeldsensordaten berücksichtigt, wobei die geschätzte Ego-Pose des mobilen Systems zu diesem Zeitraum durch das inkrementelle Lösen des durch den Faktor-Graphen repräsentierten Optimierungsproblems bekannt ist.

Alternativ ist bevorzugt vorgesehen, dass das Verfahren den Schritt Transformieren der Punktwolke von lokalen Koordinaten des mobilen Systems in Kartenkoordinaten der Surfel-Karte umfasst. In diesem Zusammenhang ist weiterhin bevorzugt vorgesehen, dass der Schritt des Erzeugens von Surfeln durch Konvertieren der Punktwolke der empfangenen Umfeldsensordaten in Sufeldaten ein Erzeugen von Surfeln in Kartenkoordinaten durch Konvertieren der in Kartenkoordinaten transformierten Punktwolke der empfangenen Umfeldsensordaten in Surfeldaten umfasst.

Wie bereits erwähnt, wird das Optimierungsproblem inkrementell gelöst. Da besonders bevorzugt das Optimierungsproblem gelöst wird, bevor die Surfel oder die Punktwolke von lokalen Koordinaten des mobilen Systems in Kartenkoordinaten transformiert werden, wird immer die aktuelle Schätzung der Ego-Pose des mobilen Systems zur Koordinatentransformation verwendet.

Bei einer hypothetisch vollständig korrekten Schätzung der Ego-Pose des mobilen Systems müssten die als vorbekannt identifizierten Surfel in den erzeugten Surfel sich beim Vergleich mit der Surfel-Karte vollständig korrekt auf die in der Surfel-Karte vorhandenen Surfel abbilden. Da allerdings die Ego-Pose, wie auch die Surfel-Karte jeweils eine Schätzung sind, werden die als vorbekannt identifizierten Surfel in der Regel nicht vollständig korrekt auf die vorhandenen Surfel in der Surfel-Karte abgebildet. Dieser Fehler zwischen dem Surfel in der Surfel-Karte und dem transformierten Surfel bzw. dem aus der transformierten Punktewolke erzeugten Surfel wird im Folgenden als Abbildungsfehler bezeichnet. Bevorzugt umfasst der Abbildungsfehler für scheibenartige Surfel eine symmetrische Punkt-zu-Ebene-Distanz zwischen dem Surfel der Surfel-Karte und dem transformierten Surfel oder dem aus der transformierten Punktewolke erzeugten Surfel, und für stangenartige Surfel eine symmetrische Punkt-zu-Gerade-Distanz zwischen dem Surfel der Surfel-Karte und dem transformierten Surfel oder dem aus der transformierten Punktewolke erzeugten Surfel.

Zudem umfasst der Abbildungsfehler bevorzugt für scheibenartige wie auch stangenartige Surfel einen Rotationsfehler zwischen dem Surfel der Surfel-Karte und dem transformierten Surfel oder dem aus der transformierten Punktewolke erzeugten Surfel, wobei der Rotationsfehler durch den Winkel zwischen den Normalenvektoren der zwei Surfel gegeben ist.

Unter einer symmetrischen Punkt-zu-Ebene-Distanz wird vorliegend der Durchschnitt der folgenden zwei Distanzen d1 und d2 verstanden, wobei das erste Surfel das Surfel der Surfel-Karte bezeichnet und das zweite Surfel das transformierten Surfel oder das aus der transformierten Punktewolke erzeugten Surfel: d1 ist die kürzeste Distanz zwischen dem Zentrum des ersten Surfels zu einer durch die zwei längsten Hauptachsen definierte Ebene des zweiten Surfels; d2 ist die kürzeste Distanz zwischen dem Zentrum des zweiten Surfels zu einer durch die zwei längsten Hauptachsen definierte Ebene des ersten Surfels.

Unter einer symmetrische Punkt-zu-Gerade-Distanz wird vorliegend der Durchschnitt der folgenden zwei Distanzen d3 und d4 verstanden, wobei das erste Surfel das Surfel der Surfel-Karte bezeichnet und das zweite Surfel das transformierten Surfel oder das aus der transformierten Punktewolke erzeugten Surfel: d3 ist die kürzeste Distanz zwischen dem Zentrum des ersten Surfels zu einer durch die längste Hauptachse definierte Gerade des zweiten Surfels; d4 ist die kürzeste Distanz zwischen dem Zentrum des zweiten Surfels zu einer durch die längste Hauptachse definierte Gerade des ersten Surfels.

In anderen Worten dient also der im nächsten Schritt des Verfahrens für die als vorbekannt identifizierten Surfel hinzugefügte Surfel-Faktor dazu, diesen Abbildungsfehler zwischen dem Surfel der Surfel-Karte und dem transformierten Surfel bzw. dem aus der transformierten Punktewolke erzeugten Surfel in der weiteren Optimierung zu berücksichtigen. Bevorzugt umfasst also der Schritt Hinzufügen des Surfel-Faktors zu dem Faktor-Graphen für die als vorbekannt identifizierten Surfel ein Hinzufügen des Surfel-Faktors zu dem Faktor-Graphen für die als vorbekannt identifizierten Surfel unter Berücksichtigung des Abbildungsfehlers zwischen dem Surfel der Surfel-Karte und dem transformierten Surfel oder dem aus der transformierten Punktewolke erzeugten Surfel.

Weiter bevorzugt umfasst der Schritt Identifizieren von neuen Surfeln und von vorbekannten Surfeln in den erzeugten Surfeln durch Vergleichen der Surfeldaten mit der Surfel-Karte, ein Verfeinern der geschätzten Ego-Pose des mobilen Systems bevor die Surfel von den lokalen Koordinaten des mobilen Systems in die Kartenkoordinaten transformiert werden. Bevorzugt erfolgt das Verfeinern der geschätzten Ego-Pose auf Basis veränderter Surfel, wobei die veränderten Surfel mittels eines *Generalized Iterative Closest Point Algorithmus* aus den in lokalen Koordinaten des mobilen Systems vorhandener Punktwolke generiert werden.

Zum Identifizieren von vorbekannten Surfeln in den erzeugten Surfeln werden bevorzugt mittels eines balancierten Suchbaumes und insbesondere mittels eines k-d-Baumes Vorschläge für in Kartenkoordinaten vorhandene Surfeldaten erzeugt, die nachfolgend mit der Surfel-Karte verglichen werden. Bevorzugt werden Surfel der Surfeldaten, die derart nicht als vorbekannt identifiziert werden, als neue Surfel identifiziert.

Ebenfalls ist in Zusammenhang mit dem Schritt Identifizieren von neuen Surfeln und von vorbekannten Surfeln in den erzeugten Surfeln durch Vergleichen der Surfeldaten mit der Surfel-Karte bevorzugt vorgesehen, dass aus der Menge an als vorbekannt identifizierten Surfeln eine vordefinierte Teilmenge weiterverwendet wird. Bei Punktwolken mit vielen Punkten kann es vorkommen, dass viele redundante Identifikationen von vorbekannten Surfeln stattfinden. Zwecks Verbesserung der Rechenleistung werden bevorzugt lediglich eine Teilmenge davon weiterverwendet. Das Ermitteln der Teilmenge erfolgt bevorzugt, indem die als vorbekannt identifizierten Surfel basierend auf ihrer Pose in ein Raster mit geringer Auflösung einsortiert werden. Aus diesem Raster werden bevorzugt mittels eines *Greedy* Algorithmus eine vordefinierte Anzahl an vorbekannt identifizierten Surfel ausgewählt, die die weiterverwendete Teilmenge bilden.

In Zusammenhang mit dem Erzeugen der Surfel aus der Punktwolke ist bevorzugt vorgesehen, dass dies mittels eines auf einer Hauptkomponentenanalyse basierenden rekursiven Verfahrens erfolgt. Derart lässt sich auf einfache Weise das Ziel erreichen, möglichst große Surfel, die zugleich ein Maximum an Stangenartigkeit oder Scheibenartigkeit aufweisen, aus der Punktwolke zu generieren. Solche Surfel zu erzeugen, ermöglicht die Umgebung in einem hohen Dynamikumfang an Details abzubilden. Beispielsweise ist derart eine gute Repräsentation einer Straße möglich, die auf LiDAR-Daten basiert, bei den zwischen den vom LiDAR erzeugten Ringmustern eine große Distanz zwischen den einzelnen Ringen ist, und zugleich ein hoher Detailgrad bei den Leitplanken und/oder Begrenzungspfähle möglich ist.

Eine Hauptkomponentenanalyse ist ein mathematisches Verfahren, das auch als Hauptachsentransformation oder Singulärwertzerlegung bekannt ist. Es erlaubt umfangreiche Datensätze durch Benutzung der Eigenvektoren der Kovarianzmatrix zu strukturieren. In anderen Worten können Datensätze veranschaulicht werden, indem eine Vielzahl statistischer Variablen durch eine geringere Zahl möglichst aussagekräftiger Linearkombinationen - den sogenannten Hauptkomponenten - genähert wird.

In diesem Zusammenhang ist gemäß einer weiteren bevorzugten Weiterbildung der Erfindung vorgesehen, dass der Schritt des Erzeugens von Surfeln durch Konvertieren der Punktwolke der empfangenen Umfeldsensordaten in Surfeldaten rekursiv erfolgt und folgende Schritte umfasst:
- Zuordnen einzelner Punkte der Punktwolke zu vordefinierten Voxeln, wobei jeder Voxel einen Volumenanteil der Umgebung darstellt,
- Erzeugen von ersten Surfeln durch Durchführen einer Hauptkomponentenanalyse mit den jeweils einem Voxel zugeordneten Punkten für alle Voxel,
- Teilen aller Voxel in Untervoxel und erneutes Erzeugen von zweiten Surfeln durch Durchführen einer Hauptkomponentenanalyse mit den jeweils dem Untervoxel zugeordneten Punkten für alle Untervoxel,
- Vergleichen eines Gütewertes der erzeugten ersten Surfeln mit den erzeugten zweiten Surfeln, und
- Wiederholtes Durchführen der zwei vorherigen Schritte, bis der Vergleich des Gütewertes der erzeugen ersten Surfel einen besseren Gütewert für das erste Surfel aufweist, oder bis das durch Teilen erzeugte Untervoxel eine vordefinierte Minimalzahl an Punkten unterschreitet.

In einem ersten Schritt werden also die Punkte in Voxeln eingruppiert. Ein Voxel - von englisch *volume element -* entspricht einem Volumenanteil der Umgebung. Bevorzugt entspricht ein Voxel einem Volumenanteil von etwa 4 m³. Bevorzugt legen die Voxel eine Obergrenze für die Größe der Surfel fest, da bevorzugt vorgesehen ist, dass kein Surfel generiert werden kann, das größer als ein Voxel ist. Da das Verfahren rekursiv erfolgt tritt zudem beim Wiederholten Durchführen der zwei vorherigen Schritte im Schritt "Teilen aller Voxel in Untervoxel", der vorherige Untervoxel an die Stelle des Voxels aus dem die zweiten Surfel erzeugt werden. Im weiteren Schritt "Vergleichen des Gütewertes" wird somit auch der Gütewert dieser neu erzeugten zweiten Surfel mit dem Gütewert der im vorherigen Durchlauf erzeugten zweiten Surfeln verglichen, so dass also die vorherigen zweiten Surfel an die Stelle der ersten Surfel treten.

In Bezug zum Gütewert der Surfel ist gemäß einer weiteren bevorzugten Weiterbildung der Erfindung vorgesehen, dass der Gütewert einen Durchschnitt einer gewichteten Summe aus folgenden Werten über alle erzeugten Surfel umfasst: Einem auf der Ausdehnung des Surfels entlang seiner drei Hauptachsen, bevorzugt entlang der zwei längsten Hauptachsen basierenden Wert, einem auf der Ausdehnung des Surfels entlang seiner kürzesten Hauptachse basierenden Wert, einem auf der Kombination, insbesondere dem Verhältnis der zwei vorgenannten Werten basierendem Wert, und einem auf der Stangenartigkeit des Surfels basierenden Wert. Durch diesen Gütewert lassen sich auf einfache Weise die am besten geeigneten Surfel finden.

Um mit Datensätzen, in denen dynamische Objekte vorkommen, besonders verlässliche Ergebnisse zu erzielen, ist gemäß einer bevorzugten Weiterbildung der Erfindung vorgesehen, dass jedem Surfel ein beim Lösen des Optimierungsproblems veränderbarer Dynamik-Wert zugeordnet wird, und dass der Dynamik-Wert das Surfel zu Beginn des Lösens des Optimierungsproblems als nicht dynamisch kennzeichnet. Bevorzugt ist der Dynamik-Wert ein Wert aus dem Wertebereich 0 bis 1 (oder 0 % bis 100 %), wobei ein Dynamik-Wert von 0 das Surfel als vollkommen statisches Surfel kennzeichnet, und ein Dynamik-Wert von 1 das Surfel als vollkommen dynamisches Surfel kennzeichnet. Bei statischen Surfeln wird davon ausgegangen, dass sie ihre Pose über die Zeit nicht verändern, bei dynamischen Surfeln wird hingegen davon ausgegangen, dass eine Veränderung der Pose des Surfels über die Zeit stattfindet.

Bevorzugt ist vorgesehen, dass der Initialisierungswert jeweils 0 beträgt, also davon ausgegangen wird, dass das Surfel vollkommen statisch ist. Bevorzugt ist der Dynamik-Wert veränderbar und Teil des Optimierungsproblems. Dies ermöglicht, dass während der Optimierung der Dynamik-Wert des Surfels verändert werden kann, wenn dies zu besseren Ergebnissen führt.

In diesem Zusammenhang ist gemäß einer weiteren bevorzugten Weiterbildung der Erfindung vorgesehen, dass jedem Surfel der beim Lösen des Optimierungsproblems veränderbare Dynamik-Wert zugeordnet wird, dass beim Schritt des Identifizierens von neuen Surfeln und von vorbekannten Surfeln in den erzeugten Surfeln durch Vergleichen der Surfeldaten mit der Surfel-Karte der Abbildungsfehler zwischen den vorbekannten Surfeln und den erzeugten Surfeln bestimmt wird und dass der Abbildungsfehler beim Lösen des Optimierungsproblems mit dem Dynamik-Wert gewichtet wird. In anderen Worten wird beim Lösen des Optimierungsproblems der weiter oben beschriebene Abbildungsfehler weniger stark gewichtet je dynamischer ein Surfel ist. Insbesondere erfolgt dies, indem der Abbildungsfehler mit der Differenz zwischen 1 und dem Dynamik-Wert des Surfels multipliziert wird.

Zudem ist in diesem Zusammenhang gemäß einer weiteren bevorzugten Weiterbildung vorgesehen, dass ein Erhöhen des Dynamik-Wertes des Surfels während des Lösens des Optimierungsproblems bestraft wird. Dies verhindert, dass der Optimierungsalgorithmus in eine Lösung konvergiert, in der alle Surfel einen Dynamik-Wert von 1 aufweisen und demnach der Abbildungsfehler aller Surfel nicht mehr berücksichtigt werden müsste. In anderen Worten kann also derart der Optimierungsalgorithmus einen Kompromiss finden, da ein hoher Abbildungsfehler für dynamischere Surfel weniger gewichtet wird als für statischere Surfel.

In Bezug zum Verändern des Dynamik-Wertes ist bevorzugt vorgesehen, dass mittels einer Voxel-Karte die Dynamik-Werte jener Surfel, die sich innerhalb eines in der Voxel-Karte vorhandenen Voxels befinden, mittels eines gleitenden Mittelwertes und insbesondere mittels eines exponentiell geglätteten Durchschnittes, über die Zeit nachgehalten werden, der Dynamik-Wert von Surfel, und bevorzugt von scheibenartigen Surfeln innerhalb eines Voxels in Richtung statisch verändert wird, wenn der gleitende Mittelwert des Voxels einen vordefinierten Grenzwert unterschreitet, und/oder der Dynamik-Wert von Surfeln, und bevorzugt von scheibenartigen Surfeln innerhalb eines Voxels in Richtung dynamisch verändert wird, wenn der gleitende Mittelwert des Voxels den vordefinierten Grenzwert überschreitet.

Die Art des Veränderns des Dynamik-Wertes beruht auf der Idee, dass Bereiche, in denen zuvor ein dynamisches Objekt war, mit hoher Wahrscheinlich nicht plötzlich ein statisches Objekt enthalten. Somit ist es wahrscheinlicher, dass ein neues Surfel an einer Stelle in der Surfel-Karte, wo bisher dynamische Surfel vorhanden sind, ebenfalls dynamisch ist. Bevorzugt werden also die Surfel zunächst Voxeln in der Voxel-Karte zugeordnet. Wenn ein Surfel einem Voxel zugeordnet werden soll, das an einem Ort in der Voxel-Karte ist, bei dem bisher noch kein Voxel verzeichnet ist, weil in diesem Volumenanteil bisher noch kein Surfel gesehen wurde, wird ein neues Voxel an diesem Ort in der Voxel-Karte hinzugefügt und diesem neuen Voxel der Dynamik-Wert des einen Surfels zugeordnet. Wenn ein Surfel hingegen einem Voxel zugeordnet wird, das schon in der Voxel-Karte vorhanden ist, weil in diesem Volumenanteil bisher schon andere Surfel gesehen wurden, wird der Dynamik-Wert, der diesem vorhandenen Voxel zugeordnet ist, bevorzugt mittels des exponentiell geglätteten Durchschnittes aktualisiert. Nachfolgend wird bevorzugt der aktualisierte Dynamik-Wert des Voxels mit einem Grenzwert verglichen, bei Unterschreitung des Grenzwertes der Dynamik-Wert für alle Surfel und besonders bevorzugt für alle scheibenartige Surfel innerhalb des Voxels verringert, und bei Überschreiten des Grenzwertes der Dynamik-Wert für alle Surfel und bevorzugt für alle scheibenartigen Surfel innerhalb des Voxels erhöht.

Weiterhin ist in Zusammenhang mit dem Dynamik-Wert gemäß einer bevorzugten Weiterbildung der Erfindung vorgesehen, dass jedem Surfel der beim Lösen des Optimierungsproblems veränderbare Dynamik-Wert zugeordnet wird, dass als vorbekannt identifizierte Surfel auf Basis ihrer räumlichen Distanz zueinander und/oder ihrer ähnlichen Ausrichtung zueinander zu Clustern zusammengefasst werden, und dass der Faktor-Graph für jeden Cluster einen Cluster-Faktor aufweist, derart dass Unterschiede des Dynamik-Wertes der Surfel innerhalb eines Clusters während des Lösens des Optimierungsproblems bestraft werden.

In anderen Worten werden durch den Cluster-Faktor vom Optimierungsalgorithmus Lösungen favorisiert, bei denen die zu einem Cluster gehörenden Surfel sehr ähnliche Dynamik-Werte aufweisen. Die Grundidee dahinter ist, dass Surfel die zu einem Objekt gehören, wie beispielsweise zu einem anderen Verkehrsteilnehmer auch vergleichbar große Dynamik-Werte aufweisen müssen, da sich das Objekt als Einheit bewegt.

Bevorzugt umfasst in diesem Zusammenhang das Zusammenfassen von als vorbekannt identifizierten Surfel zu Clustern ein Identifizieren einer vordefinierten Anzahl an zu einem spezifischen Surfel nächster Nachbarsurfel mittels eines k-nächste-Nachbarn-Algorithmus (*k-Nearest-Neighbor-Algorithm*) und ein Auswählen einer Subgruppe aus diesen identifizierten Nachbarsurfeln durch Vergleichen der Differenz der Pose der Nachbarsurfel mit dem spezifischen Surfel mit vordefinierten Grenzwerten. Insbesondere wird die Distanz des Nachbarsurfels zu dem spezifischen Surfel mit einem ersten vordefinierten Grenzwert verglichen und der Winkel zwischen den Normalenvektoren des Nachbarsurfels und des spezifischen Surfels mit einem zweiten vordefinierten Grenzwert verglichen. Wenn beide Vergleiche zeigten, dass die Pose des Nachbarsurfels sehr ähnlich zur Pose des spezifischen Surfel ist, wird davon ausgegangen, dass es sich beim Nachbarsurfel um ein Surfel handelt, das zum gleichen Objekt gehört. In anderen Worten approximieren die Surfel in dieser Subgruppe also Surfel, die zum gleichen Objekt gehören. Für den Fall, dass eines der Surfel der Subgruppe schon einem Clustern zugeordnet wurde, und die anderen Surfel noch keinem Cluster zugeordnet wurden, werden die weiteren Surfel der Subgruppe zum gleichen Cluster zugeordnet. Für den Fall, dass keines der Surfel der Subgruppe schon einem Clustern zugeordnet wurde, wird ein neuer Cluster generiert. Für den Fall, dass ein Surfel der Subgruppe einem ersten Cluster zugeordnet ist und ein weiteres Surfel der Subgruppe schon einem anderen Cluster zugeordnet ist, wird weder ein neuer Cluster generiert, noch findet eine Umteilung der Surfel zu anderen Clustern statt. In anderen Worten bleibt es im dritten Fall bei der zuvor schon vorhandenen Zuordnung der Surfel zu Clustern.

Gemäß einer weiteren bevorzugten Weiterbildung der Erfindung ist zudem vorgesehen, dass die empfangenen Umfeldsensordaten für jeden Punkt der Punktwolke einen Messzeitpunkt aufweisen und der Schritt Identifizieren von neuen Surfeln und von vorbekannten Surfeln in den erzeugten Surfeln durch Vergleichen der Surfeldaten mit der Surfel-Karte, ein Erzeugen von entzerrten Surfeln aus den Surfeldaten unter Berücksichtigung einer geschätzten Geschwindigkeit des mobilen Systems, und ein Vergleich der entzerrten Surfeldaten mit der Surfel-Karte umfasst. Als Folge davon, dass jeder Punkt der Punktwolke einen Messzeitpunkt aufweist, umfasst das Surfel bevorzugt die Verteilung von Messzeitpunkten der Punkte entlang der drei Hauptachsen und/oder die Approximation der Verteilung von Messzeitpunkten. Diese Angaben werden also bevorzugt dazu verwendet, um die Surfel zu entzerren.

Da viele Umfeldsensoren Entfernungen messen, indem ein oder mehrere Laser sich um sich selbst drehen, kommt es durch die Fortbewegung des mobilen Systems zu einem sogenannten Rolling-Shutter-Effekt. Dieser Effekt entsteht, weil der Ort des Umfeldsensors zum Messzeitpunkt des ersten Datenpunkts der Umdrehung des Lasers nicht derselbe ist wie beim letzten Datenpunkt der Umdrehung des Lasers. Wenn also alle Punkte der Punktwolke, die im spezifischen Zeitraum einer Umdrehung aufgezeichnet wurden, betrachtet werden, als wären sie ein Einzelbild, bei dem sich der Umfeldsensor nicht fortbewegt hätte, erscheinen die Punkte verzerrt.

Um diesen Effekt zu berücksichtigen, wird also bevorzugt beim Vergleichen der Surfeldaten mit der Surfel-Karte das Erzeugen von entzerrten Surfeln durchgeführt, indem unter Berücksichtigung der geschätzten Geschwindigkeit des mobilen Systems ein neues Zentrum des Surfels, und eine neue Rotation des Surfels ermittelt werden. Diese entzerrten Surfel werden dann genutzt, um im Weiteren den Abbildungsfehler zu ermitteln.

Dieses Vorgehen ist besonders vorteilhaft, wenn keine Eigenbewegungssensordaten wie beispielsweise Trägheitssensordaten, GPS-Daten und/oder Daten des Vortriebsystems wie Raddrehzahlsensordaten des mobiles Systems vorliegen und lediglich die Umweltsensordaten empfangen werden. In solch einem Fall ist die geschätzte Geschwindigkeit des mobilen Systems zu Beginn der Optimierung sehr unzuverlässig. Ohne die Entzerrung der Surfel könnten starke Rolling-Shutter-Effekte in Kombination mit der unzuverlässig geschätzten Geschwindigkeit zu einem Drift in der Optimierung führen, der das Ergebnis der gesamten Optimierung beinträchtigen könnte.

Gemäß einer weiteren bevorzugten Weiterbildung der Erfindung ist vorgesehen, dass der Faktor-Graph wenigstens einen Knoten aufweist, der eine Anbringungshöhe eines oder mehrerer Umfeldsensoren auf dem mobilen System repräsentiert, und das Verfahren die Schritte
- Identifizieren von Straßen repräsentierender Surfel in der Surfel-Karte, und
- Hinzufügen eines Umfeldsensor-Anbringungs-Faktors zu dem Faktor-Graphen für als Straße repräsentierende Surfel identifizierte Surfel,
umfasst.

Bei mehreren Umfeldsensoren ist weiter bevorzugt vorgesehen, dass der Knoten, der die Anbringungshöhe repräsentiert, die Ausrichtung der mehreren Umfeldsensoren zueinander berücksichtigt.

Insbesondere im Anwendungsfall, bei dem das mobile System als Kraftfahrzeug ausgestalte ist, kann von der Annahme ausgegangen werden, dass die Anbringungshöhe und die Grundausrichtung des Umfeldsensors oder die Grundausrichtung der Umfeldsensoren zueinander auf dem mobilen System sich im Vergleich zur Straße während der Vermessung der Umgebung nicht ändern. Diese Annahme wird bevorzugt dahingehend implementiert, dass die Anbringungshöhe als weitere optimierbare Variable im Faktor-Graphen als Knoten repräsentiert wird und in der Surfel-Karte Straße repräsentierende Surfel identifiziert werden. Straßen repräsentierende Surfel werden bevorzugt anhand einer hohen Scheibenartigkeit, ihrer Ausrichtung zur geschätzten Ego-Pose des mobilen Systems und/oder der Lage ihres Zentrums unterhalb der geschätzten Ego-Pose des mobilen Systems identifiziert.

Gemäß einer weiteren bevorzugten Weiterbildung umfasst das Verfahren den Schritt Entfernen von Surfel aus der Surfel-Karte, wobei das entfernte Surfel nach einer vorgegebenen Anzahl Optimierungen nicht dazu verwendet worden ist im Schritt Identifizieren von neuen Surfeln und von vorbekannten Surfeln in den erzeugten Surfeln durch Vergleichen der Surfeldaten mit der Surfel-Karte, vorbekannte Surfel zu identifizieren. In anderen Worten werden also nur einmal gesehene Surfel nach einer vorbestimmen Zeit wieder aus der Surfel-Karte entfernt. Das Entfernen von Surfeln aus der Surfel-Karte führt dazu, dass beim Schritt des Identifizierens von neuen Surfeln und von vorbekannten Surfeln in den erzeugten Surfeln durch Vergleichen der Surfeldaten mit der Surfel-Karte, weniger Rechenleistung notwendig ist.

Gemäß einer weiteren bevorzugten Weiterbildung umfasst das Verfahren den Schritt Ausschließen einer weiteren Optimierung eines Surfels, wenn dieses Surfel für eine vordefinierte Zeit nicht zum Identifizieren von vorbekannten Surfeln verwendet wurde, wenn dieses Surfel eine vordefinierte Anzahl an Surfel-Faktoren zum Faktor-Graphen beigetragen hat, und/oder wenn dieses Surfel schon mehr als eine vordefinierte Anzahl von Iterationen Teil des Optimierungsproblems ist. In anderen Worten können also bevorzugt aus Leistungsgründen beim numerischen Optimieren Surfel von der Optimierung ausgeschlossen werden. Das Ausschließen eines Surfels von der weiteren Optimierung wird bevorzugt durch Ersetzen des Surfel-Faktors durch einen Surfel-Einfrierungs-Faktor im Faktor-Graphen umgesetzt.

Die Aufgabe wird zudem durch eine Vorrichtung zur Datenverarbeitung umfassend Mittel zur Ausführung des obigen beschriebenen Verfahrens gelöst.

Weiterhin betrifft die Erfindung ein Computerprogrammprodukt, umfassend Befehle, die bei der Ausführung des Programms durch einen Computer diesen veranlassen, das obige beschriebene Verfahren auszuführen.

Ferner wird erfindungsgemäß ein computerlesbarer Datenträger bereitgestellt, auf dem das obige Computerprogrammprodukt gespeichert ist.

Die technischen Vorteile der Vorrichtung zur Datenverarbeitung, des Computerprogrammproduktes und des computerlesbaren Datenträgeres ergeben sich für den Fachmann durch die Beschreibung des Verfahrens zum Bestimmen der Ego-Pose des mobilen Systems und Erstellen der auf 3D-Ellipsoiden basierende Surfel-Karte der Umgebung, sowie durch die nachfolgend beschriebenen Ausführungsbeispiele.

In der Zeichnung zeigen
- Fig. 1: schematisch einen beispielshaften Faktor-Graphen, der durch ein computerimplementiertes Verfahren zum Bestimmen einer Ego-Pose eines mobilen Systems und Erstellen einer auf 3D-Ellipsoiden basierende Surfel-Karte einer Umgebung (SLAM-Verfahren), gemäß einem bevorzugten Ausführungsbeispiel der Erfindung erstellt wurde,
- Fig. 2: schematisch einen Ablauf eines SLAM-Verfahrens, gemäß einem weiteren bevorzugten Ausführungsbeispiel der Erfindung,
- Fig. 3: schematisch einen weiteren beispielshaften Faktor-Graphen, der durch das SLAM-Verfahren aus Figur 2 erstellt wurde,
- Fig. 4: schematisch einen detaillierteren Ablauf der in Figur 2 in einem Ablauf-Kästchen zusammengefassten Schritte,
- Fig. 5: schematisch ein rekursives Verfahren zum Ermitteln von Surfeln aus einer Punktwolke, gemäß einem bevorzugten Ausführungsbeispiel der Erfindung,
- Fig. 6: schematisch einen Ablauf zum Nachhalten eines einem Surfel zugewiesenen Dynamik-Wertes, gemäß einem bevorzugten Ausführungsbeispiel der Erfindung, und
- Fig. 7: schematisch einen Ablauf zum Zusammenfassen einzelner Surfel zu Clustern, gemäß einem bevorzugten Ausführungsbeispiel der Erfindung.

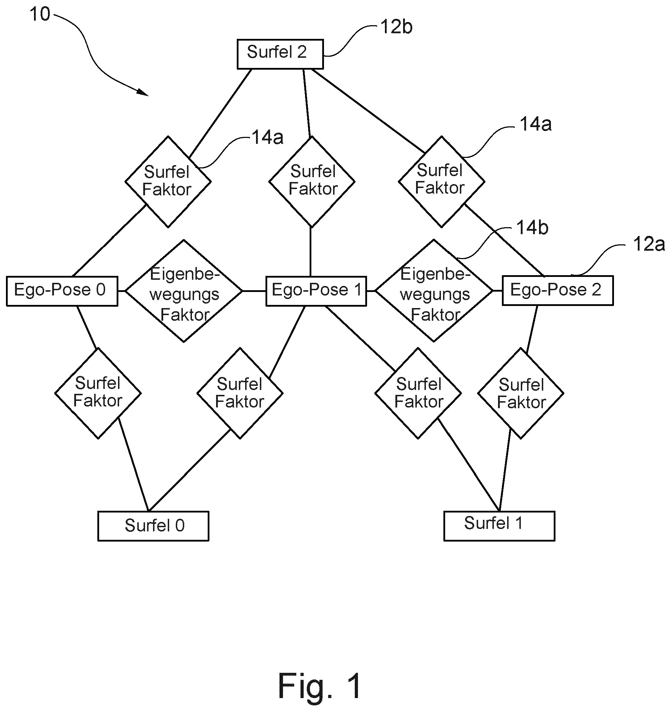

Figur 1 zeigt schematisch einen beispielshaften Faktor-Graphen 10, wie er durch ein computerimplementiertes Verfahren zum Bestimmen einer Ego-Pose eines mobilen Systems und Erstellen einer auf 3D-Ellipsoiden basierende Surfel-Karte einer Umgebung (SLAM-Verfahren) gemäß einem bevorzugten Ausführungsbeispiel erstellt wurde. Faktor-Graphen 10 sind eine Form probabilistischer grafischer Modelle. Die Knoten 12 im Faktor-Graphen 10 repräsentieren die unbekannten Variablen des Optimierungsproblems während Faktoren 14 des Faktor-Graphen 10 probabilistische Restriktionen auf diese Variablen darstellen, die auf Messergebnissen und/oder Vorwissen beruhen.

Der Faktor-Graph 10 in Figur 1 weist im vorliegenden Ausführungsbeispiel Knoten 12a auf, die eine spezifische Ego-Pose des mobilen Systems repräsentieren und Surfel-Knoten 12b, die ein spezifisches Surfel 16 in Kartenkoordinaten repräsentieren. Zudem weisen Kanten zwischen einem Knoten 12a, der eine Ego-Pose repräsentiert und einem Knoten 12b der ein Surfel 16 repräsentiert, sogenannte Surfel-Faktoren 14a auf. Die Surfel-Faktoren 14a repräsentieren eine räumliche Restriktion zwischen der von dem Knoten 12a repräsentierten Ego-Pose und der aus dieser spezifischen Ego-Pose für den Umfeldsensor erkennbares Surfel 16 und umfassen eine Wahrscheinlichkeitsverteilung über eine Darstellbarkeit dieses Surfels 16 für den Umfeldsensor aus dieser spezifischen Ego-Pose heraus. Weiterhin weisen Kanten zwischen zwei Knoten 12a, die Ego-Posen repräsentieren einen Eigenbewegungs-Faktor 14b auf, der eine räumliche Restriktion zwischen den von den jeweiligen Knoten 12a repräsentierten Ego-Posen repräsentiert und eine Wahrscheinlichkeitsverteilung über eine Transformation zwischen den zwei Ego-Posen umfasst.

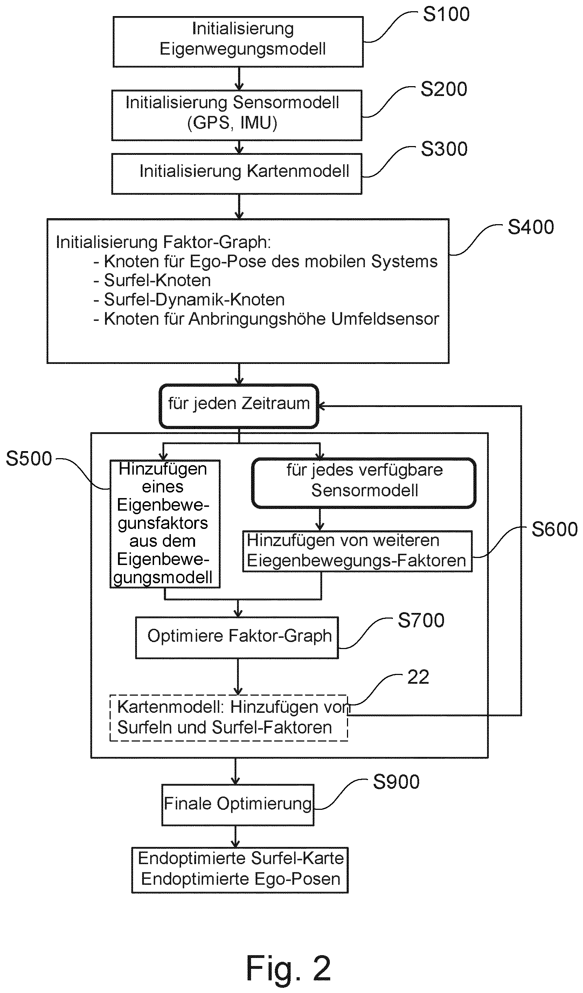

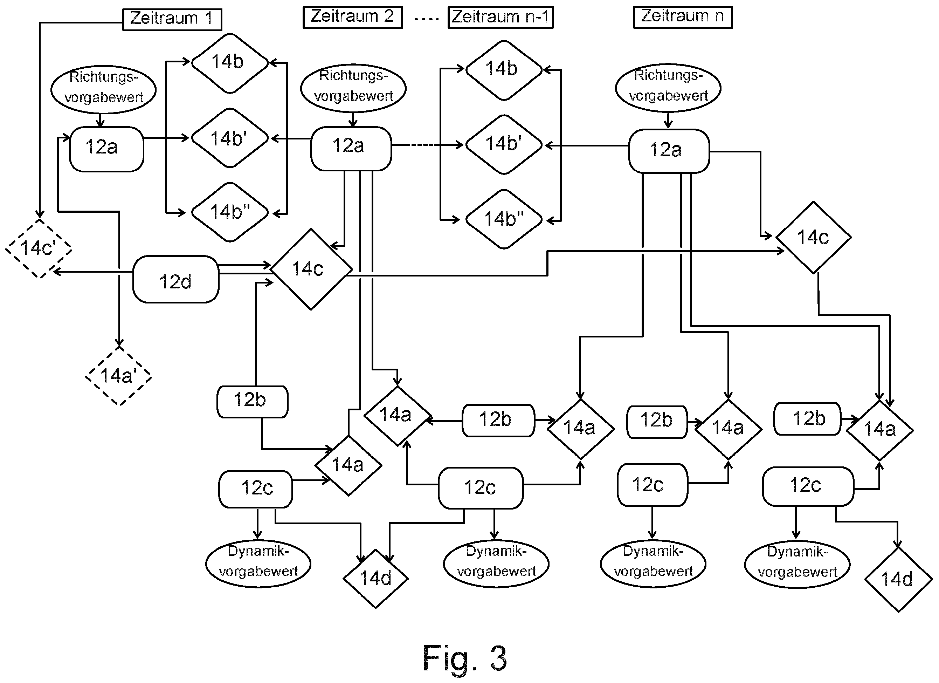

Figur 2 zeigt schematische einen Ablauf eines bevorzugten Ausführungsbeispiel eines SLAM-Verfahrens. Nachfolgend werden mit Bezug auf die Figuren 2 und 3, wobei in Figur 3 ein weiterer beispielhafter Faktor-Graph 10 abgebildet ist, die Schritte des Verfahrens erklärt.

Nachdem in den Vorbereitungsschritten S100, S200, S300 des Verfahrens ein Eigenbewegungsmodell des mobilen Systems, ein Sensormodell und ein Kartenmodell initialisiert wurden, wird danach der Faktor-Graph 10 inkrementell erstellt. Die Initialisierung des Sensormodells S200 findet unter Berücksichtigung der vorhandenen Ressourcen statt. Im vorliegenden Ausführungsbeispiel liegen zusätzlich zu Umfeldsensordaten, die von einem am mobilen System angebrachten Umfeldsensor, der die Umgebung des mobilen Systems vermessen hat, auch weitere Eigenbewegungssensordaten vor, nämlich Trägheitssensordaten, und GPS-Daten. Bei den Umfeldsensordaten handelt es sich in diesem Ausführungsbeispiel um LiDAR-Sensordaten.

Zum inkrementellen Erstellen des Faktor-Graphen 10 muss dieser erst initialisiert werden, was in Schritt S400 erfolgt. Dafür werden zunächst die Arten von Knoten 12 definiert. Im vorliegenden Ausführungsbeispiel werden vier Arten von Knoten verwendet. Analog zu Figur 1 werden Knoten 12a, die eine spezifische Ego-Pose des mobilen Systems repräsentieren initialisiert und Surfel-Knoten 12b, die ein spezifisches Surfel 16 in Kartenkoordinaten repräsentieren, initialisiert. Zudem wird vorliegend jedem Surfel 16 ein veränderbarer Dynamik-Wert zugeordnet, der als Surfel-Dynamik-Knoten 12c initialisiert wird. Weiterhin wird ein Knoten 12d initialisiert, der eine Anbringungshöhe des Umfeldsensors auf dem mobilen System repräsentiert. Die Knoten 12 sind in Figur 3 in rechteckigen Kästchen mit abgerundeten Ecken dargestellt.

Danach findet der inkrementelle Aufbau des Faktor-Graphen 10 und die inkrementelle Lösung des durch den Faktor-Graphen 10 dargestellten Optimierungsproblems dar, indem zunächst die Umweltsensordaten empfangen werden, die die Umgebung des mobilen Systems als Punktwolke 18 in einem spezifischen Zeitraum 20 repräsentieren. Danach wird für jeden spezifischen Zeitraum 20, der entsprechende die spezifische Ego-Pose des mobilen Systems repräsentierende Knoten 12a zum Faktor-Graphen 10 hinzugefügt, und Eigenbewegungs-Faktoren 14b, 14b', 14b" zwischen zwei Ego-Posen repräsentierende Knoten 12a hinzugefügt (Schritte S500 und S600). Faktoren 14 sind in Figur 3 als Rauten dargestellt.

Da im vorliegenden Ausführungsbeispiel weitere Ressourcen zur Verfügung stehen, beruht der Eigenbewegungs-Faktor 14b einerseits auf den Modellannahmen des Eigenbewegungsmodelles und zugleich auf den empfangenen Eigenbewegungssensordaten. Deshalb sind in Figur 3 jeweils drei Rauten zwischen den die Ego-Pose des mobilen Systems repräsentierenden Knoten 12a eingezeichnet, also ein Faktor 14b aus dem Eigenbewegungsmodell, ein Faktor 14b' aus den empfangenen inertialen Messeinheitsdaten und ein Faktor 14b" aus dem empfangenen GPS-Daten.

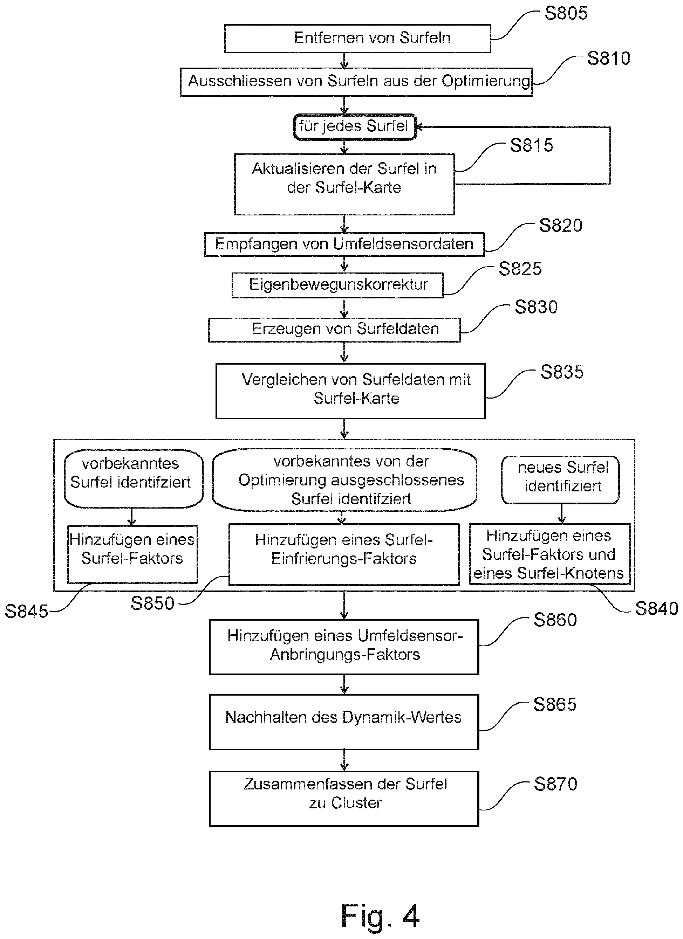

Danach (Schritt S700) wird das durch den soweit erstellten Faktor-Graphen 10 repräsentierte Optimierungsproblem gelöst, um eine erste Schätzung für die Ego-Pose des mobilen Systems zu erhalten. Die nachfolgenden Schritte werden vom Karten-Modell durchgeführt und sind in Figur 2 in einem Ablaufs-Kästchen 22 zusammengefasst, da Figur 4 diese Schritte detailliert darstellt. Vorliegend werden die Schritte innerhalb des Ablaufkästchens 22 zum besseren Verständnis aber kurz abgehandelt. Nachdem eine erste Schätzung für die Ego-Pose des mobilen Systems erhalten wurde, werden aus den empfangenen Umfeldsensordaten Surfeldaten erzeugt und in den derart erzeugten Surfeln 16 durch Vergleichen der Surfeldaten mit der Surfel-Karte neue Surfel 16 und vorbekannten Surfel 16 identifiziert. Für neue Surfel 16 wird ein Surfel-Knoten 12b und ein Surfel-Faktor 14a zu dem Faktor-Graphen 10 hinzugefügt. Für als vorbekannt identifizierte Surfel 16 wird ein Surfel-Faktor 14a zu dem Faktor-Graphen 10 hinzugefügt. Dieser Vorgang wird für jeden spezifischen Zeitraum 20 wiederholt, bis alle spezifischen Zeiträume 20 der empfangenen Umfeldsensordaten abgearbeitet wurden. Daraufhin erfolgt in Schritt S900 ein finales Lösen des Optimierungsproblem, woraus die Endoptimierte Surfel-Karte und die Endoptimierten Ego-Posen des mobilen Systems in den jeweiligen spezifischen Zeiträumen 20 der empfangenen Umfeldsensordaten hervorgehen.

Figur 4 zeigt einen detaillierteren schematischen Ablauf der in Figur 2 in einem Ablauf-Kästchen 22 zusammengefassten Schritte, die vom Kartenmodell durchgeführt werden. Zunächst werden in Schritt S805 Surfel 16, die bisher nicht dazu verwendet wurden, beim Vergleich der Surfeldaten mit der Surfel-Karte vorbekannte Surfel 16 zu identifizieren, aus der Surfel-Karte entfernt. Zudem werden in Schritt S810 gewisse Surfel 16 von der weiteren Optimierung ausgeschlossen, wenn dieses Surfel für eine vordefinierte Zeit nicht zum Identifizieren von vorbekannten Surfeln verwendet wurde, wenn dieses Surfel eine vordefinierte Anzahl an Surfel-Faktoren zum Faktor-Graphen 10 beigetragen hat, und/oder wenn dieses Surfel schon mehr als eine vordefinierte Anzahl von Iterationen Teil des Optimierungsproblems ist. Das Ausschließen des Surfels von der Optimierung erfolgt durch Ersetzen des Surfel-Faktors 14a durch einen Surfel-Einfrierungs-Faktor 14a' im Faktor-Graphen 10.

Danach werden in Schritt S815 alle Surfel 16 in der Surfel-Karte auf Basis der bisher durch die Optimierung gefundene Lösung aktualisiert. Wie bereits schon in Bezug zu Figur 2 erwähnt, werden daraufhin die in Schritt S820 empfangenen Umfelsensordaten verarbeitet. Zunächst findet in Schritt S825 dazu eine Eigenbewegungskorrektur der Punktwolke 18 unter der Berücksichtigung der aktuell geschätzten Geschwindigkeit des mobilen Systems - also der Ego-Posen Differenz zwischen zwei direkt aufeinanderfolgenden Zeiträumen dividiert durch die Länge eines Zeitraumes - statt. Daraufhin werden in Schritt S830 durch Konvertieren der Punktwolke 18 der empfangenen Umfeldsensordaten in Surfeldaten Surfel 16 erstellt.

Die Surfeldaten werden in Schritt S835 mit der Surfel-Karte verglichen, um in den erzeugten Surfeln 16 vorbekannte und neue Surfel 16 zu identifizieren. Im vorliegenden in Figur 4 dargestellten Ausführungsbeispiel werden drei Fälle unterschieden. Bei neu identifizierten Surfeln 16 wird dem Faktor-Graphen 10 ein neuer dieses Surfel repräsentierender Surfel-Knoten 12b sowie ein Surfel-Faktor 14a hinzugefügt (S840). Bei vorbekannten Surfeln 16, wird dem Faktor-Graphen 10 hingegen der Surfel-Faktor 14a hinzugefügt (S845 und S850). In diesem Fall wird zudem unterschieden, ob das vorbekannte Surfel 16 ein von der weiteren Optimierung ausgeschlossenes Surfel 16 ist oder nicht. Im Falle, dass es von der weiteren Optimierung ausgeschlossen ist, ist der hinzugefügte Surfel-Faktor 14a ein Surfel-Einfrierungs-Faktor 14a', der in Figur 3 gestrichelt gekennzeichnet ist (Schritt S840).

Nachfolgend werden in Schritt S860 Straßen repräsentierende Surfel 16 in der Surfel-Karte identifiziert und ein Umfeldsensor-Anbringungs-Faktor 14c zu dem Faktor-Graphen 10 für als Straße repräsentierend identifizierte Surfel hinzugefügt. Für den Fall, dass das die Straße repräsentierende Surfel ein von der Optimierung ausgeschlossenes Surfel ist, wird ein gefrorener Umfeldsensor-Anbringungs-Faktor 14c' hinzugefügt.

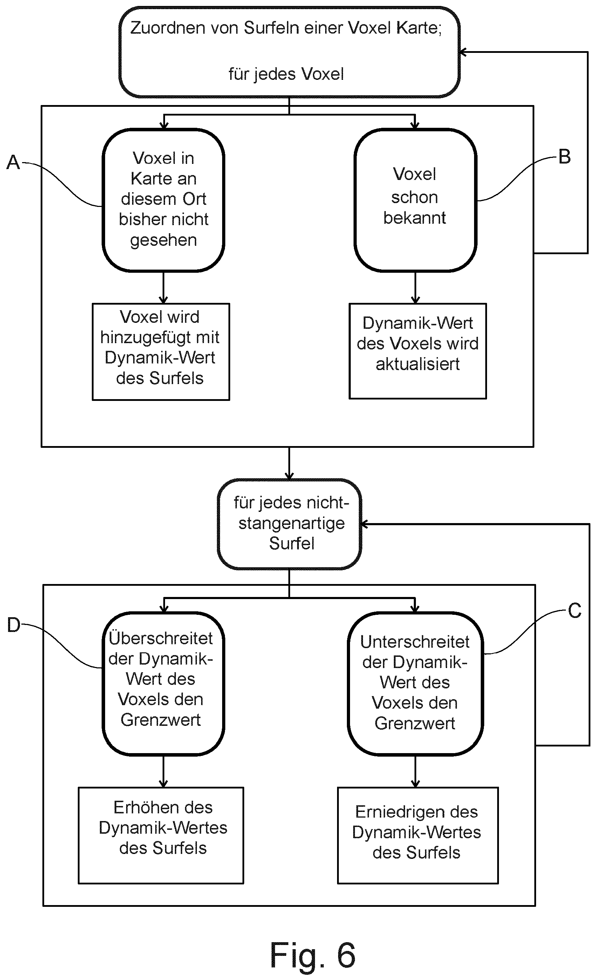

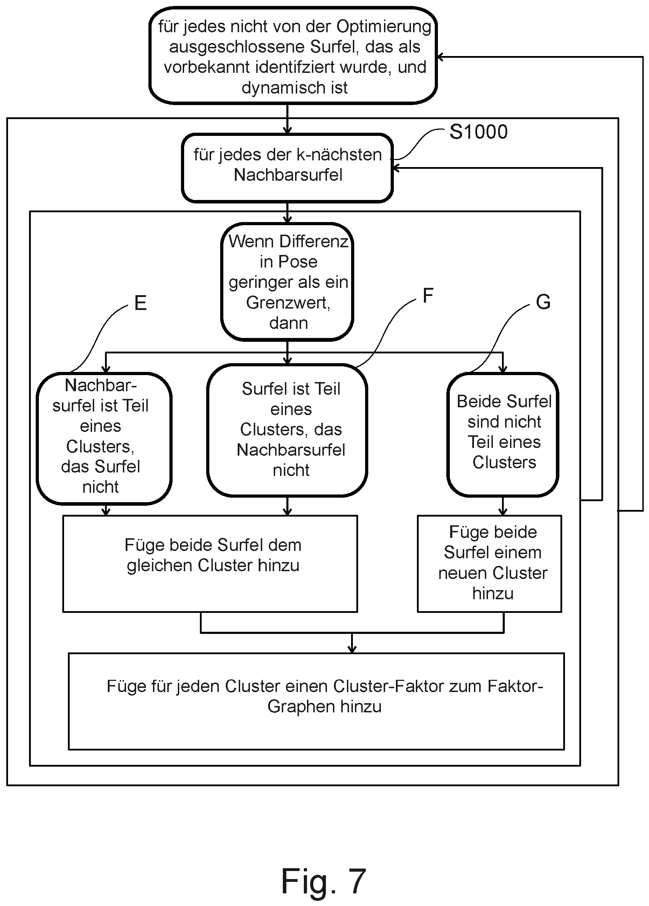

Danach werden wie im Folgenden noch detaillierter in Bezug zu Figur 6 ausgeführt, in Schritt S865 der dem Surfel 16 zugeordnete Dynamik-Wert nachgehalten und in Schritt S870 wie ebenfalls noch detaillierter in Bezug zu Figur 7 ausgeführt, die als vorbekannt identifizierten Surfel 16 auf Basis ihrer räumlichen Distanz zueinander und/oder ihrer ähnlichen Ausrichtung zueinander zu Clustern zusammengefasst.

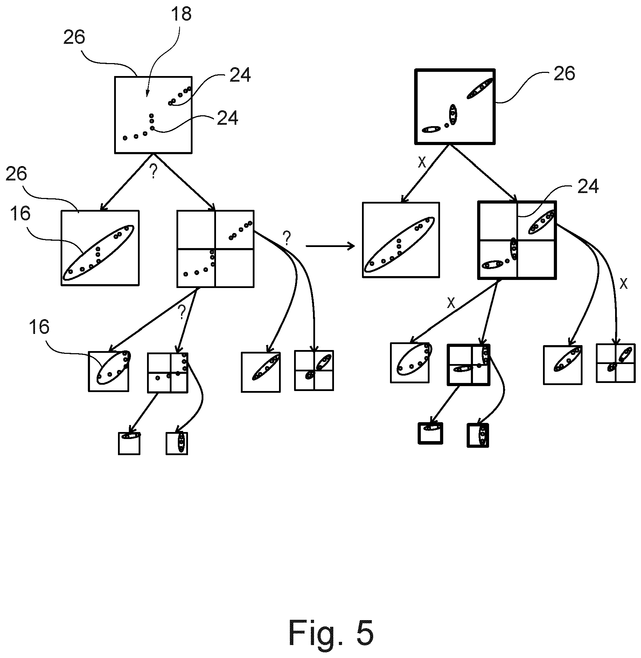

Zunächst wird aber mit Verweis auf Figur 5 erläutert, wie mittels eines rekursiven Verfahrens gemäß einem bevorzugten Ausführungsbeispiel aus der Punktwolke 18 der empfangenen Umfeldsensordaten Surfel 16 erzeugt werden. Dafür werden die einzelnen Punkte 24 der Punktwolke 18 zu vordefinierten Voxeln 26 zugeordnet, wobei jeder Voxel 26 einen Volumenanteil der Umgebung darstellt. In Figur 5 ist ein 2-Dimensionales Beispiel gezeigt, so dass ein Voxel 26 von einem Quadrat repräsentiert wird. Es werden mittels einer Hauptkomponentenanalyse erste Surfel 16 mit den jeweils einem Voxel 26 zugeordneten Punkten für alle Voxel 26 erzeugt. Die Surfel 26 werden in Figur 5 durch eine ellipsenförmige Umrandung der Punkte 24 der Punktwolke 18 dargestellt. Danach werden alle Voxel 26 in Untervoxel 28 geteilt und erneut durch eine Hauptkomponentenanlyse zweite Surfel 16 erzeugt. Durch Vergleichen eines Gütewertes der erzeugten ersten Surfel 16 mit den erzeugten zweiten Surfeln 16, und Wiederholtes Durchführen der zwei vorherigen Schritte - unter der Maßgabe, dass jeweils die vorherigen zweiten Surfel 16 beim erneuten Durchführen den ersten Surfeln 16 entsprechen und die vorherigen Untervoxel 28 den neuen Voxeln 26 - werden die geeignetsten Surfel 26 ermittelt, wenn der Vergleich des Gütewertes der erzeugen ersten Surfel 16 einen besseren Gütewert für die ersten Surfel 16 aufweist, oder wenn das durch Teilen erzeugte Untervoxel 28 eine vordefinierte Minimalzahl an Punkten 24 unterschreitet.

Figur 6 zeigt schematisch einen Ablauf gemäß einem weiteren bevorzugten Ausführungsbeispiel, wie der jedem Surfel 16 zugewiesene Dynamik-Wert nachgehalten wird. Zunächst werden die Surfel 16 Voxeln 26 in einer Voxel-Karte zugeordnet. Wenn ein Surfel 16 einem Voxel 26 zugeordnet werden soll, das an einem Ort in der Voxel-Karte ist, bei dem bisher noch kein Voxel 26 verzeichnet ist (siehe in Figur 6 Fall A), wird ein neues Voxel 26 an diesem Ort in der Voxel-Karte hinzugefügt und diesem neuen Voxel 26 der Dynamik-Wert des einen Surfels 16 zugeordnet. Wenn ein Surfel 16 hingegen einem Voxel 26 zugeordnet wird, das schon in der Voxel-Karte vorhanden ist (siehe Fall B), wird der Dynamik-Wert, der diesem vorhandenen Voxel 26 zugeordnet ist, aktualisiert. Das Aktualisieren erfolgt im vorliegenden Ausführungsbeispiel mittels eines exponentiell geglätteten Durchschnittes. Nachfolgend wird der aktualisierte Dynamik-Wert des Voxels 26 mit einem Grenzwert verglichen, in Fall C bei Unterschreitung des Grenzwertes für alle scheibenartige Surfel innerhalb des Voxels 26 der Dynamik-Wert verringert, und in Fall D bei Überschreiten des Grenzwertes für alle scheibenartige Surfel innerhalb des Voxels 26 der Dynamik-Wert erhöht.

Figur 7 zeigt schematisch einen Ablauf gemäß einem weiteren bevorzugten Ausführungsbeispiel, wie als vorbekannt identifizierte Surfel 16 auf Basis ihrer räumlichen Distanz zueinander und/oder ihrer ähnlichen Ausrichtung zueinander zu Clustern zusammengefasst werden. Wie in Figur 3 zudem zu sehen ist, weist der Faktor-Graph 10 für jeden Cluster einen Cluster-Faktor 14d auf, derart dass Unterschiede des Dynamik-Wertes der Surfel 16 innerhalb eines Clusters während des Lösens des Optimierungsproblems bestraft werden.

In Bezug zu Figur 7 werden zunächst in Schritt S1000 eine vordefinierte Anzahl an zu einem spezifischen Surfel 16 nächster Nachbarsurfel identifiziert. Wenn in den Fällen E und F für ein Paar aus einem Nachbarsurfel und dem spezifischen Surfel 16 die Differenz der Posen geringer als ein vordefinierter Grenzwert ist, und eines der zwei Surfel 16 von dem Paar schon einem Cluster zugeordnet ist, wird das andere Surfel 16 von dem Paar ebenfalls diesem Cluster zugeordnet. Wenn hingegen in Fall G keines der Surfel 16 des Paares einem Cluster zugeordnet wird, wird ein neuer Cluster generiert. Schlussendlich wird für jeden Cluster dem Faktor-Graphen 10 ein Cluster-Faktor 14d hinzugefügt.

### Bezugszeichenliste

- 10: Faktor-Graph
- 12: Knoten
- 12a: Ego-Pose repräsentierender Knoten
- 12b: Surfel-Knoten
- 12c: Surfel-Dynamik-Knoten
- 12d: Knoten, der Anbringungshöhe eines Umfeldsensors auf dem mobilen System repräsentiert
- 14: Faktor
- 14a: Surfel-Faktor
- 14a': Surfel-Einfrierungsfaktor
- 14b: Eigenbewegungsfaktor
- 14b': Faktor für inertiale Messeineheitsdaten
- 14b": Faktor für GPS-Daten
- 14c: Umfeldsensor-Anbringungs-Faktor
- 14c': gefrorener Umfeldsensor-Anbringungs-Faktor
- 14d: Cluster-Faktor
- 16: Surfel
- 18: Punktwolke
- 20: Zeitraum, *frame*
- 22: Ablauf-Kästchen
- 24: Punkte
- 26: Voxel
- 28: Untervoxel

## Patentansprüche

1. Computerimplementiertes Verfahren zum Bestimmen einer Ego-Pose eines mobilen Systems und Erstellen einer auf 3D-Ellipsoiden basierende Surfel-Karte einer Umgebung mittels eines durch einen Faktor-Graphen (10) repräsentierten Optimierungsproblems, umfassend die Schritte
- Empfangen von Umfeldsensordaten, wobei die Umfeldsensordaten durch wenigstens einen am mobilen System angebrachten Umfeldsensor, der die Umgebung des mobilen Systems vermisst, generiert wurden und wobei die Umfeldsensordaten die Umgebung des mobilen Systems als Punktwolke (18) in jeweils einem spezifischen Zeitraum (20) repräsentieren,
- Erzeugen von Surfeln (16) durch Konvertieren der Punktwolke (18) der empfangenen Umfeldsensordaten in Surfeldaten,
- Identifizieren von neuen Surfeln (16) und von vorbekannten Surfeln (16) in den erzeugten Surfeln (16) durch Vergleichen der Surfeldaten mit der Surfel-Karte, und
- Hinzufügen eines Surfel-Faktors (14a, 14a') zu dem Faktor-Graphen (10) für die als vorbekannt identifizierten Surfel (16) und/oder Hinzufügen eines Surfel-Knotens (12b) und eines Surfel-Faktors (14a) zu dem Faktor-Graphen (10) für als neu identifizierte Surfel (16),
wobei ein Knoten (12a) des Faktor-Graphens (10) eine spezifische Ego-Pose des mobilen Systems oder als Surfel-Knoten (12b) ein spezifisches Surfel (16) in Kartenkoordinaten repräsentiert,
wobei eine Kante zwischen einem Knoten (12a), der eine Ego-Pose repräsentiert und einem Knoten (12b) der ein Surfel (16) repräsentiert, als Surfel-Faktor (14a, 14a') eine räumliche Restriktion zwischen der von dem Knoten (12a) repräsentierten Ego-Pose und der aus dieser spezifischen Ego-Pose für den Umfeldsensor erkennbares Surfel (16) repräsentiert und eine Wahrscheinlichkeitsverteilung über eine Darstellbarkeit dieses Surfels (16) für den Umfeldsensor aus dieser spezifischen Ego-Pose heraus umfasst, und
wobei der das Optimierungsproblem repräsentierende Faktor-Graph (10) inkrementell nach Empfangen der Umfeldsensordaten eines ersten spezifischen Zeitraumes (20) erstellt und das Optimierungsproblem inkrementell gelöst wird, bevor die Surfel-Faktoren (14a, 14a') der als vorbekannt identifizierten Surfel und/oder bevor die Surfel-Knoten (12b) und Surfel-Faktoren (14a) der neuen Surfel (16) zu dem Faktor-Graphen (10) hinzugefügt werden und die Schritte für Umfeldsensordaten eines späteren spezifischen Zeitraums (20) als des ersten spezifischen Zeitraumes (20) wiederholt werden.

2. Verfahren nach Anspruch 1, wobei eine Kante zwischen zwei Knoten (12a), die Ego-Posen repräsentieren einen Eigenbewegungs-Faktor (14b, 14b', 14b") umfasst, der eine räumliche Restriktion zwischen den von den jeweiligen Knoten (12a) repräsentierten Ego-Posen repräsentiert und eine Wahrscheinlichkeitsverteilung über eine Transformation zwischen den zwei Ego-Posen umfasst.

3. Verfahren nach dem vorhergehenden Anspruch, wobei der Eigenbewegungs-Faktor (14b, 14b', 14b") auf Basis von Modellannahmen eines Eigenbewegungsmodelles beruht, oder
wobei das Verfahren den Schritt Empfangen von Eigenbewegungssensordaten, beispielsweise Trägheitssensordaten, GPS-Daten und/oder Daten des Vortriebsystems wie Raddrehzahlsensordaten des mobilen Systems umfasst und der Eigenbewegungs-Faktor (14b, 14b', 14b") auf Basis von Modellannahmen des Eigenbewegungsmodelles und auf den empfangenen Eigenbewegungssensordaten beruht.

4. Verfahren nach einem der vorhergehenden Ansprüche, wobei
a) der Schritt des Erzeugens von Surfeln (16) durch Konvertieren der Punktwolke (18) der empfangenen Umfeldsensordaten in Surfeldaten ein Erzeugen von Surfeln (16) in lokalen Koordinaten des mobilen Systems und der Schritt des Identifizierens von neuen Surfeln (16) und von vorbekannten Surfeln (16) in den erzeugten Surfeln (16) durch Vergleichen der Surfeldaten mit der Surfel-Karte, eine Transformieren der in lokalen Koordinaten des mobilen Systems erzeugten Surfel (16) in Surfel (16) in Kartenkoordinaten umfasst, oder
b) der Schritt des Erzeugens von Surfeln (16) durch Konvertieren der Punktwolke (18) der empfangenen Umfeldsensordaten in Surfeldaten ein Transformieren der Punktwolke von lokalen Koordinaten des mobilen Systems in Kartenkoordinaten der Surfel-Karte und ein Erzeugen von Surfeln in Kartenkoordinaten durch Konvertieren der in Kartenkoordinaten transformierten Punktwolke umfasst.

5. Verfahren nach einem der vorhergehenden Ansprüche, wobei der Schritt des Erzeugens von Surfeln (16) durch Konvertieren der Punktwolke (18) der empfangenen Umfeldsensordaten in Surfeldaten rekursiv erfolgt und folgende Schritte umfasst:
- Zuordnen einzelner Punkte (24) der Punktwolke (18) zu vordefinierten Voxeln (26), wobei jeder Voxel (26) einen Volumenanteil der Umgebung darstellt,
- Erzeugen von ersten Surfeln (16) durch Durchführen einer Hauptkomponentenanalyse mit den jeweils einem Voxel (26) zugeordneten Punkten (24) für alle Voxel (26),
- Teilen aller Voxel (26) in Untervoxel (28) und erneutes Erzeugen von zweiten Surfeln (16) durch Durchführen einer Hauptkomponentenanalyse mit den j eweils dem Untervoxel (28) zugeordneten Punkten (24) für alle Untervoxel (28),
- Vergleichen eines Gütewertes der erzeugten ersten Surfeln (16) mit den erzeugten zweiten Surfeln (16), und
- Wiederholtes Durchführen der zwei vorherigen Schritte, bis der Vergleich des Gütewertes der erzeugen ersten Surfel (16) einen besseren Gütewert für das erste Surfel (16) aufweist, oder bis das durch Teilen erzeugte Untervoxel (28) eine vordefinierte Minimalzahl an Punkten (24) unterschreitet.

6. Verfahren nach dem vorhergehenden Anspruch, wobei der Gütewert einen Durchschnitt einer gewichteten Summe aus folgenden Werten über alle erzeugten Surfel (16) umfasst: Einem auf der Ausdehnung des Surfels (16) entlang seiner zwei längsten Hauptachsen basierenden Wert, einem auf der Ausdehnung des Surfels (16) entlang seiner kürzesten Hauptachse basierenden Wert, einem auf der Kombination der zwei vorgenannten Werten basierendem Wert, und einem auf der Stangenartigkeit des Surfels (16) basierenden Wert.

7. Verfahren nach einem der vorhergehenden Ansprüche, wobei jedem Surfel (16) ein beim Lösen des Optimierungsproblems veränderbarer Dynamik-Wert zugeordnet wird, und wobei der Dynamik-Wert das Surfel (16) zu Beginn des Lösens des Optimierungsproblems als nicht dynamisch kennzeichnet.

8. Verfahren nach einem der vorhergehenden Ansprüche, wobei jedem Surfel (16) ein beim Lösen des Optimierungsproblems veränderbarer Dynamik-Wert zugeordnet wird, wobei beim Schritt des Identifizierens von neuen Surfeln (16) und von vorbekannten Surfeln (16) in den erzeugten Surfeln (16) durch Vergleichen der Surfeldaten mit der Surfel-Karte ein Abbildungsfehler zwischen den vorbekannten Surfel (16) und den erzeugten Surfel (16) bestimmt wird und der Abbildungsfehler beim Lösen des Optimierungsproblems mit dem Dynamik-Wert gewichtet wird.

9. Verfahren nach einem der Ansprüche 7 oder 8, wobei ein Erhöhen des Dynamik-Wertes des Surfels (16) während des Lösens des Optimierungsproblems bestraft wird.

10. Verfahren nach einem der vorhergehenden Ansprüche, wobei jedem Surfel (16) ein beim Lösen des Optimierungsproblems veränderbarer Dynamik-Wert zugeordnet wird, wobei als vorbekannt identifizierte Surfel (16) auf Basis ihrer räumlichen Distanz zueinander und/oder ihrer ähnlichen Ausrichtung zueinander zu Clustern zusammengefasst werden, und wobei der Faktor-Graph (10) für jeden Cluster einen Cluster-Faktor (14d) aufweist, derart dass Unterschiede des Dynamik-Wertes der Surfel (16) innerhalb eines Clusters während des Lösens des Optimierungsproblems bestraft werden.

11. Verfahren nach einem der vorhergehenden Ansprüche, wobei die empfangenen Umfeldsensordaten für jeden Punkt (24) der Punktwolke (14) einen Messzeitpunkt aufweisen und der Schritt Identifizieren von neuen Surfeln (16) und von vorbekannten Surfeln (16) in den erzeugten Surfeln (16) durch Vergleichen der Surfeldaten mit der Surfel-Karte, ein Erzeugen von entzerrten Surfeln aus den Surfeldaten unter Berücksichtigung einer geschätzten Geschwindigkeit des mobilen Systems, und ein Vergleich der entzerrten Surfeldaten mit der Surfel-Karte umfasst.

12. Vorrichtung zur Datenverarbeitung umfassend Mittel zur Ausführung des Verfahrens nach einem der vorherigen Verfahrensansprüche.

13. Computerprogrammprodukt, umfassend Befehle, die bei der Ausführung des Programms durch einen Computer diesen veranlassen, das Verfahren nach einem der vorherigen Verfahrensansprüche auszuführen.

14. Computerlesbarer Datenträger, auf dem das Computerprogrammprodukt nach dem vorherigen Anspruch gespeichert ist.

## Claims

1. A computer-implemented method for determining an ego pose of a mobile system and generating a 3D ellipsoid-based surfel map of an environment using an optimization problem represented by a factor graph (10), comprising the steps of
- receiving environment sensor data, the environment sensor data having been generated by at least one environment sensor attached to the mobile system for measuring the environment of the mobile system, and the environment sensor data representing the environment of the mobile system as a point cloud (18) in a specific time period (20) in each case,
- generating surfels (16) by converting the point cloud (18) of the received environment sensor data into surfel data,
- identifying new surfels (16) and previously known surfels (16) in the generated surfels (16) by comparing the surfel data with the surfel map, and
- adding a surfel factor (14a, 14a') to the factor graph (10) for the surfels (16) identified as previously known and/or adding a surfel node (12b) and a surfel factor (14a) to the factor graph (10) for surfels (16) identified as new,
wherein a node (12a) of the factor graph (10) represents a specific ego pose of the mobile system in map coordinates or, as a surfel node (12b), represents a specific surfel (16) in map coordinates,
wherein an edge between a node (12a) representing an ego pose and a node (12b) representing a surfel (16) represents, as a surfel factor (14a, 14a'), a spatial restriction between the ego pose represented by the node (12a) and the surfel (16) recognizable for the environment sensor from said specific ego pose, and comprises a probability distribution of a representability of said surfel (16) for the environment sensor from said specific ego pose, and
wherein the factor graph (10) representing the optimization problem is created incrementally after receiving the environment sensor data of a first specific time period (20) and the optimization problem is solved incrementally before the surfel factors (14a, 14a') of the surfels identified as previously known and/or before the surfel nodes (12b) and surfel factors (14a) of the new surfels (16) are added to the factor graph (10) and the steps are repeated for environment sensor data of a later specific time period (20) than the first specific time period (20).

2. The method according to claim 1, wherein an edge between two nodes (12a) representing ego poses comprises an egomotion factor (14b, 14b', 14b") representing a spatial restriction between the ego poses represented by the respective nodes (12a) and comprising a probability distribution over a transformation between the two ego poses.

3. The method according to the preceding claim,
wherein the proper motion factor (14b, 14b', 14b") is based on model assumptions of a proper motion model, or
wherein the method comprises the step of receiving proper motion sensor data, for example inertial sensor data, GPS data, and/or propulsion system data such as wheel speed sensor data of the mobile system, and the proper motion factor (14b, 14b', 14b") is based on model assumptions of the proper motion model and on the received proper motion sensor data.

4. The method according to any one of the preceding claims, wherein
**a)** the step of generating surfels (16) by converting the point cloud (18) of the received environment sensor data into surfel data comprises generating surfels (16) in local coordinates of the mobile system and the step of identifying new surfels (16) and previously known surfels (16) in the generated surfels (16) by comparing the surfel data with the surfel map, transforming the surfels (16) generated in local coordinates of the mobile system into surfels (16) in map coordinates, or
**b)** the step of generating surfels (16) by converting the point cloud (18) of the received environment sensor data into surfel data comprises transforming the point cloud from local coordinates of the mobile system into map coordinates of the surfel map and generating surfels in map coordinates by converting the point cloud transformed into map coordinates.

5. The method according to any one of the preceding claims, wherein the step of generating surfels (16) is performed recursively by converting the point cloud (18) of the received environment sensor data into surfel data and comprises the following steps:
- assigning individual points (24) of the point cloud (18) to predefined voxels (26), each voxel (26) representing a volume fraction of the environment,
- generating first surfels (16) by performing a principal component analysis with the points (24) associated with each voxel (26) for all voxels (26),
- dividing all voxels (26) into sub-voxels (28) and generating second surfels (16) again by performing a principal component analysis with the points (24) associated with each sub-voxel (28) for all sub-voxels (28),
- comparing a quality value of the generated first surfels (16) with the generated second surfels (16), and
- repeating the two previous steps until the comparison of the quality value of the generated first surfels (16) shows a better quality value for the first surfel (16), or until the sub-voxel (28) generated by dividing falls below a predefined minimum number of points (24).

6. The method according to the preceding claim,
wherein the quality value comprises an average of a weighted sum of the following values over all generated surfels (16): a value based on the extension of the surfel (16) along the two longest main axes thereof, a value based on the extension of the surfel (16) along the shortest main axis thereof, a value based on the combination of the two aforementioned values, and a value based on the rod-like nature of the surfel (16).

7. The method according to any one of the preceding claims, wherein each surfel (16) is associated with a dynamic value able to be changed during the solving of the optimization problem, and wherein the dynamic value identifies the surfel (16) as non-dynamic at the start of the solving of the optimization problem.

8. The method according to any one of the preceding claims, wherein each surfel (16) is associated with a dynamic value able to be changed when solving the optimization problem, wherein, in the step of identifying new surfels (16) and previously known surfels (16) in the generated surfels (16), a mapping error between the previously known surfels (16) and the generated surfels (16) is determined by comparing the surfel data with the surfel map and the mapping error is weighted with the dynamic value when solving the optimization problem.

9. The method according to any one of claims 7 or 8, wherein increasing the dynamic value of the surfel (16) during the solving of the optimization problem is penalized.

10. The method according to any one of the preceding claims, wherein a dynamic value able to be changed during the solving of the optimization problem is associated with each surfel (16), wherein surfels (16) identified as previously known are grouped together into clusters on the basis of the spatial distance thereof to one another and/or the similar orientation thereof to one another, and wherein the factor graph (10) has a cluster factor (14d) for each cluster such that differences in the dynamic value of the surfels (16) within a cluster are penalized during the solving of the optimization problem.

11. The method according to any one of the preceding claims, wherein the received environment sensor data has a measurement time for each point (24) of the point cloud (14), and the step of identifying new surfels (16) and previously known surfels (16) in the generated surfels (16) by comparing the surfel data with the surfel map comprises generating rectified surfels from the surfel data taking into account an estimated speed of the mobile system, and comparing the rectified surfel data with the surfel map.

12. An apparatus for data processing comprising means for carrying out the method according to any one of the preceding method claims.

13. A computer program product comprising instructions causing the computer to carry out the method according to any one of the preceding method claims when the program is executed by a computer.

14. A computer-readable data carrier on which the computer program product according to the previous claim is stored.

## Revendications

1. Procédé mis en œuvre par ordinateur pour déterminer une posture propre d'un système mobile et créer une carte de surfels d'un environnement basée sur des ellipsoïdes 3D au moyen d'un problème d'optimisation représenté par un graphe de facteurs (10), comprenant les étapes suivante:
- réception de données de capteurs d'environnement, les données de capteurs d'environnement ayant été générées par au moins un capteur d'environnement monté sur le système mobile, qui mesure l'environnement du système mobile, et les données de capteurs d'environnement représentant l'environnement du système mobile sous la forme d'un nuage de points (18) à chaque fois dans un intervalle de temps (20) spécifique,
- génération de surfels (16) par conversion du nuage de points (18) des données de capteurs d'environnement reçues en données de surfels,
- identification de nouveaux surfels (16) et de surfels préalablement connus (16) dans les surfels (16) générés par comparaison des données de surfels avec la carte de surfels, et
- ajout d'un facteur de surfels (14a, 14a') au graphe de facteurs (10) pour les surfels (16) identifiés comme préalablement connus et/ou ajout d'un nœud de surfels (12b) et d'un facteur de surfels (14a) au graphe de facteurs (10) pour les surfels (16) identifiés comme nouveaux,
un nœud (12a) du graphe de facteurs (10) représentant une posture propre spécifique du système mobile ou, en tant que nœud de surfels (12b), un surfel (16) spécifique en coordonnées cartographiques,
une arête entre un nœud (12a) qui représente une posture propre et un nœud (12b) qui représente un surfel (16) représentant, en tant que facteur de surfel (14a, 14a'), une restriction spatiale entre la posture propre représentée par le nœud (12a) et le surfel (16) reconnaissable pour le capteur d'environnement à partir de cette posture propre spécifique, et comprenant une distribution de probabilité à propos d'une représentabilité de ce surfel (16) pour le capteur d'environnement à partir de cette posture propre spécifique, et
le graphe de facteurs (10) représentant le problème d'optimisation étant établi de manière incrémentielle après réception des données de capteurs d'environnement d'un premier intervalle de temps (20) spécifique et le problème d'optimisation étant résolu de manière incrémentielle avant que les facteurs de surfels (14a, 14a') des surfels identifiés comme préalablement connus et/ou avant que les nœuds de surfels (12b) et les facteurs de surfels (14a) des nouveaux surfels (16) soient ajoutés au graphe de facteurs (10) et les étapes étant répétées pour les données de capteurs d'environnement d'un intervalle de temps (20) spécifique ultérieure au premier intervalle de temps (20) spécifique.

2. Procédé selon la revendication 1, une arête entre deux nœuds (12a) qui représentent des postures propres comprenant un facteur de mouvement propre (14b, 14b', 14b''), lequel représente une restriction spatiale entre les postures propres représentées par les nœuds (12a) respectifs et comprenant une distribution de probabilité sur une transformation entre les deux postures propres.

3. Procédé selon la revendication précédente, le facteur de mouvement propre (14b, 14b', 14b'') étant basé sur des hypothèses de modèle d'un modèle de mouvement propre, ou le procédé comprenant l'étape consistant à recevoir des données de capteur de mouvement propre, par exemple des données de capteur inertiel, des données GPS et/ou des données du système de propulsion telles que des données de capteur de vitesse de rotation de roues du système mobile, et le facteur de mouvement propre (14b, 14b', 14b'') étant basé sur des hypothèses de modèle du modèle de mouvement propre et sur les données de capteur de mouvement propre reçues.

4. Procédé selon l'une des revendications précédentes,
a) l'étape de génération de surfels (16) par conversion du nuage de points (18) des données de capteurs d'environnement reçues en données de surfels comprenant une génération de surfels (16) dans les coordonnées locales du système mobile, et l'étape d'identification de nouveaux surfels (16) et de surfels (16) préalablement connus dans les surfels (16) générés par comparaison des données de surfels avec la carte de surfels comprenant une transformation des surfels (16) générés dans les coordonnées locales du système mobile en surfels (16) dans les coordonnées cartographiques, ou
b) l'étape de génération de surfels (16) par conversion du nuage de points (18) des données de capteurs d'environnement reçues en données de surfels comprenant une transformation du nuage de points des coordonnées locales du système mobile en coordonnées cartographiques de la carte de surfels et une génération de surfels dans les coordonnées cartographiques par conversion du nuage de points transformé en coordonnées cartographiques.

5. Procédé selon l'une des revendications précédentes, l'étape de génération de surfels (16) par conversion du nuage de points (18) des données de capteurs d'environnement reçues en données de surfels étant effectuée de manière récursive et comprenant les étapes suivantes:
- affectation de points individuels (24) du nuage de points (18) à des voxels (26) prédéfinis, chaque voxel (26) représentant une fraction volumique de l'environnement,
- génération de premiers surfels (16) par exécution d'une analyse en composantes principales avec les points (24) respectivement affectés à un voxel (26) pour tous les voxels (26),
- division de tous les voxels (26) en sous-voxels (28) et nouvelle génération de deuxièmes surfels (16) par exécution d'une analyse en composantes principales avec les points (24) respectivement associés au sous-voxel (28) pour tous les sous-voxels (28),
- comparaison d'une valeur de qualité des premiers surfels (16) générés avec les deuxièmes surfels (16) générés, et
- exécution répétée des deux étapes précédentes jusqu'à ce que la comparaison de la valeur de qualité des premiers surfels (16) générés présente une meilleure valeur de qualité pour le premier surfel (16), ou jusqu'à ce que le sous-voxel (28) généré par division soit inférieur à un nombre minimal prédéfini de points (24).

6. Procédé selon la revendication précédente, la valeur de qualité comprenant une moyenne d'une somme pondérée des valeurs suivantes sur tous les surfels générés (16): une valeur basée sur l'étendue du surfel (16) le long de ses deux axes principaux les plus longs, une valeur basée sur l'étendue du surfel (16) le long de son axe principal le plus court, une valeur basée sur la combinaison des deux valeurs précitées et une valeur basée sur le type en tige du surfel (16).

7. Procédé selon l'une des revendications précédentes, une valeur dynamique modifiable lors de la résolution du problème d'optimisation étant affectée à chaque surfel (16), et la valeur dynamique caractérisant le surfel (16) comme non dynamique au début de la résolution du problème d'optimisation.

8. Procédé selon l'une des revendications précédentes, une valeur dynamique modifiable lors de la résolution du problème d'optimisation étant affectée à chaque surfel (16), une aberration entre les surfels (16) préalablement connus et les surfels (16) générés étant déterminée par comparaison des données de surfels avec la carte de surfels lors de l'étape d'identification de nouveaux surfels (16) et de surfels (16) préalablement connus dans les surfels (16) générés, et l'aberration étant pondérée par la valeur dynamique lors de la résolution du problème d'optimisation.

9. Procédé selon l'une des revendications 7 ou 8, une augmentation de la valeur dynamique du surfel (16) pendant la résolution du problème d'optimisation étant sanctionnée.

10. Procédé selon l'une des revendications précédentes, une valeur dynamique modifiable lors de la résolution du problème d'optimisation étant affectée à chaque surfel (16), des surfels (16) identifiés comme préalablement connus étant regroupés en grappes sur la base de leur distance spatiale les uns par rapport aux autres et/ou de leur orientation similaire les uns par rapport aux autres, et le graphe de facteurs (10) présentant un facteur de grappe (14d) pour chaque grappe, de telle sorte que des différences de la valeur dynamique des surfels (16) au sein d'une grappe pendant la résolution du problème d'optimisation sont sanctionnées.

11. Procédé selon l'une des revendications précédentes, les données de capteur d'environnement reçues présentant un instant de mesure pour chaque point (24) du nuage de points (14) et l'étape d'identification de nouveaux surfels (16) et de surfels (16) préalablement connus dans les surfels (16) générés par comparaison des données de surfels avec la carte de surfels comprenant une génération de surfels égalisés à partir des données de surfels en tenant compte d'une vitesse estimée du système mobile, et une comparaison des données de surfels égalisées avec la carte de surfels.

12. Dispositif de traitement de données comprenant des moyens pour mettre en œuvre le procédé selon l'une des revendications de procédé précédentes.

13. Produit de programme informatique comprenant des instructions qui, lors de l'exécution du programme par un ordinateur, amènent celui-ci à mettre en œuvre le procédé selon l'une des revendications de procédé précédentes.

14. Support de données lisible par ordinateur, sur lequel est mémorisé le produit de programme informatique selon la revendication précédente.
